(19) Europäisches Patentamt / European Patent Office / Office européen des brevets

(11) EP 4 759 845 A1

(12) **EUROPEAN PATENT APPLICATION**

(43) Date of publication:
**17.06.2026 Bulletin 2026/25**

(21) Application number: **25222765.7**

(22) Date of filing: **11.12.2025**

(51) International Patent Classification (IPC):
***C08F 297/04*** *(2006.01)* ***C08L 25/08*** *(2006.01)*
***C08L 53/02*** *(2006.01)* ***C09D 125/08*** *(2006.01)*
***C09D 153/02*** *(2006.01)* ***B32B 15/20*** *(2006.01)*
***B32B 27/30*** *(2006.01)* ***B32B 27/32*** *(2006.01)*
***C08J 3/24*** *(2006.01)* ***C08J 5/24*** *(2006.01)*
*C08F 212/36 (2006.01)* *C08F 212/08 (2006.01)*
*C08F 236/04 (2006.01)*

(52) Cooperative Patent Classification (CPC):
(C-Sets available)
**C08F 297/04; B32B 15/20; B32B 27/302; B32B 27/325; C08F 212/08; C08J 3/24; C08J 5/244; C08L 25/08; C09D 125/08; C09D 153/02;** C08F 212/36; C08J 2309/06; C08J 2353/02 (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **12.12.2024 US 202463733185 P**

(71) Applicant: **LCY Chemical Corp.**
**Kaohsiung City 812 (TW)**

(72) Inventors:
- **TANG, Yi-Hsuan**
  **812 Kaohsiung City (TW)**
- **JU, Tz-Jie**
  **812 Kaohsiung City (TW)**
- **CHEN, Hung Lin**
  **812 Kaohsiung City (TW)**
- **LIN, Yu-Pin**
  **812 Kaohsiung City (TW)**
- **LIU, Chi Yi**
  **812 Kaohsiung City (TW)**
- **WANG, Ging Ming**
  **812 Kaohsiung City (TW)**
- **LIN, Chiung Chi**
  **812 Kaohsiung City (TW)**
- **LIN, Hsiao-Chu**
  **812 Kaohsiung City (TW)**
- **HUANG, Ming Fu**
  **812 Kaohsiung City (TW)**

(74) Representative: **Fuchs Patentanwälte Partnerschaft mbB**
**Tower 185**
**Friedrich-Ebert-Anlage 35-37**
**60327 Frankfurt am Main (DE)**

(54) **STYRENE-BASED COPOLYMER, RESIN COMPOSITION, METAL FOIL LAMINATED BOARD, AND METHOD FOR MANUFACTURING THE SAME**

(57) A styrene-based copolymer includes styrenic units and conjugated diene units. The styrenic units are present in the amount of 20 wt% to 60 wt% based on the total weight of the styrene-based copolymer. The styrene-based copolymer has a blockiness index greater than 55 %. A resin composition includes the styrene-based copolymer. A prepreg and a resin-coated copper foil are manufactured from the resin composition. A metal foil laminated board includes the prepreg. A metal foil laminated board includes the resin-coated copper foil. A method for manufacturing the metal foil laminated board.

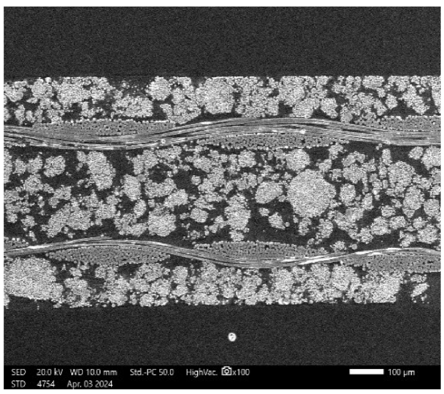


FIG. 1

EP 4 759 845 A1

(52) Cooperative Patent Classification (CPC): (Cont.)

C-Sets
**C08F 212/08, C08F 232/08, C08F 212/36,**
**C08F 212/12;**
**C08L 25/08, C08L 53/02**

## Description

### CROSS REFERENCE TO RELATED APPLICATIONS

This application claims the benefit of U.S. Provisional Application No. 63/733,185, filed on December 12, 2024, the entirety of which is incorporated by reference herein.

### TECHNICAL FIELD

The present disclosure relates to a styrene-based copolymer, a resin composition, a metal foil laminated board, and a method for manufacturing the same. In particular, it relates to a blocked styrene-based copolymer, a resin composition containing the same, a metal foil laminated board manufactured from the resin composition, and a method for manufacturing the metal foil laminated board.

### BACKGROUND

Fifth-generation (5G) mobile network technology represents the latest generation of mobile communication systems. It is characterized by high-speed transmission, low latency, and massive connectivity. Based on the frequency bands utilized, 5G can be classified into high-frequency, intermediate-frequency, and low-frequency categories. High-frequency 5G provides ultra-high data rates; however, its signal transmission and reception quality are significantly affected by high-frequency path loss, conductor loss, and dielectric loss. Therefore, it is essential to develop a metal foil laminated board with low dielectric loss to enhance signal transmission and reception performance in high-frequency 5G applications.

A common composition used for forming prepregs in metal foil laminated boards often suffers from poor processability, limited fluidity, and inadequate compatibility. Poor compatibility can cause non-uniform dispersion and aggregation, while insufficient flowability results in poor filling performance, rendering the final product unusable. Furthermore, a composition formulated without any rubber for prepreg formation may exhibit low toughness and embrittlement. In addition, improving the dielectric, thermal, and mechanical properties of copper-clad laminated boards (CCLs) remains an important challenge in this field. Therefore, there remains a need for a material and resin composition that provides both low dielectric loss and improved processability.

### BRIEF SUMMARY

In view of the above problems, the disclosure provides a styrene-based copolymer that is highly uniform and/or has a low dielectric loss tangent (Df); a resin composition containing the styrene-based copolymer; prepregs and resin-coated copper foils prepared therefrom; a metal foil laminated board manufactured from the resin composition; and a method for manufacturing the metal foil laminated board.

An embodiment of the present disclosure provides a styrene-based copolymer includes styrenic units and conjugated diene units. The styrenic units are present in the amount of 20 wt% to 60 wt% based on the total weight of the styrene-based copolymer. The styrene-based copolymer has a blockiness index greater than 55 %.

An embodiment of the present disclosure provides a resin composition including the styrene-based copolymer described above.

An embodiment of the present disclosure provides a prepreg manufactured from the resin composition described above.

An embodiment of the present disclosure provides a metal foil laminated board including the prepreg described above.

An embodiment of the present disclosure provides a resin-coated copper foil manufactured from the resin composition described above.

An embodiment of the present disclosure provides a metal foil laminated board including the resin-coated copper foil described above.

An embodiment of the present disclosure provides a method for manufacturing a metal foil laminated board. The method includes forming a mixture comprising a hydrocarbon resin and the styrene-based copolymer described above.

An embodiment of the present disclosure provides a styrene-based copolymer includes a styrene block and a conjugated diene block. In the styrene-based copolymer, the content of the styrene block is in a range of 20 wt% to 60 wt% based on the total weight of the styrene-based copolymer, and the styrene-based copolymer has a glass transition temperature equal to or greater than -20 °C.

An embodiment of the present disclosure provides a resin composition including the styrene-based copolymer described above.

An embodiment of the present disclosure provides a prepreg manufactured from the resin composition described above.

An embodiment of the present disclosure provides a metal foil laminated board including the prepreg described above.

An embodiment of the present disclosure provides a resin-coated copper foil manufactured from the resin composition described above.

An embodiment of the present disclosure provides a metal foil laminated board including the resin-coated copper foil described above.

In addition, an embodiment of the present disclosure provides a method for manufacturing a metal foil laminated board. The method includes forming a mixture comprising a hydrocarbon resin and the styrene-based copolymer described above.

## BRIEF DESCRIPTION OF THE DRAWINGS

The present invention can be more fully understood by reading the subsequent detailed description and examples with references made to the accompanying drawings, wherein:

FIG. 1 is a SEM image of a prepreg manufactured from a resin composition including a styrene-based copolymer having a blockiness index lower than 55 %;
FIG. 2 is a SEM image of a prepreg manufactured from a resin composition including a styrene-based copolymer having a blockiness index lower than 55 %;
FIG. 3 is a SEM image of a prepreg manufactured from a resin composition including a styrene-based copolymer according to an embodiment of the present disclosure; and
FIG. 4 is a SEM image of a prepreg manufactured from a resin composition including a styrene-based copolymer having a glass transition temperature lower than -20 °C according to an embodiment of the present disclosure.

## DETAILED DESCRIPTION

The following description is made for the purpose of illustrating the general principles of the disclosure and should not be taken in a limiting sense. The scope of the disclosure is best determined by reference to the appended claims.

It will be further understood that the terms "comprises," and/or "includes" when used herein, specify the presence of stated features, integers, steps, operations, elements, components and/or groups thereof, but do not preclude the presence or addition of one or more other features, integers, steps, operations, elements, components and/or groups thereof. As used herein, the singular forms "a," "an" and "the" are intended to include the plural forms as well, unless the context clearly indicates otherwise.

It will be understood that, although the terms first, second, etc. are be used herein to describe various elements, components, regions, layers and/or portions, these elements, components, regions, layers and/or portions should not be limited by these terms. These terms are used to distinguish one elements, components, regions, layers or portions from another elements, components, regions, layers or portions, but not to imply a required sequence of elements.

It will be understood that, the term "about", "approximate", "rough" as used herein usually indicates a value of a given value or range that varies within 20%, preferably within 10%, and preferably within 5%, or within 3%, or within 2%, or within 1%, or within 0.5%. The value given here are approximate value, i.e., "about", "approximate", or "rough" may be implied without specifying "about", "approximate", or "rough". It will be further understood that the values indicated in herein may include the said values as well as deviation values that are within an acceptable deviation range for people having general knowledge in art. It will be understood that the expression "a to b" used herein to indicate a specific range of values is defined as "≧a and ≦b".

The term "$C_{1-20}$ alkyl group" used herein refers to a linear, branched, or cyclic aliphatic hydrocarbon monovalent group having 1 to 20 carbon atoms in the main carbon chain. Examples of the $C_{1-20}$ alkyl group may include, but are not limited to, a methyl group, an ethyl group, a propyl group, an iso-butyl group, a sec-butyl group, a tert-butyl group, a pentyl group, an iso-amyl group, a hexyl group, a decyl group, a dodecyl group, a cyclohexyl group, a cyclooctyl group, and a cyclododecyl group.

The term "$C_{2-20}$ alkenyl group" used herein refers to a linear, branched, or cyclic aliphatic hydrocarbon monovalent group having 2 to 20 carbon atoms and at least one carbon-carbon double bond in the main carbon chain. Examples of the $C_{2-20}$ alkenyl group may include, but are not limited to, an ethenyl group, a propenyl group, an isobutenyl group, a sec-butenyl group, a tert-butenyl group, apentenyl group, an isopentenyl group, a hexenyl group, a decenyl group, a dodecenyl group, a pentadecenyl group, a cyclohexenyl group, a cyclooctenyl group, a cyclopentenyl group, a cyclopentadienyl group, and a cyclopentadecenyl group.

Unless otherwise defined, all terms (including technical and scientific terms) used herein have the same meaning

as commonly understood by a person skilled in the art to which the invention pertains. It will be further understood that terms, such as those defined in commonly used dictionaries, should be interpreted as having a meaning consistent with the relevant technology and the context or background of this disclosure and will not be interpreted in an idealized or overly formal sense unless expressly so defined herein. Descriptions of known functions and constructions that may unnecessarily obscure the present disclosure will be omitted below.

An embodiment of the present disclosure provides a styrene-based copolymer includes styrenic units and conjugated diene units. The styrenic units are present in the amount of about 20 wt% to about 60 wt% based on the total weight of the styrene-based copolymer. The styrene-based copolymer has a blockiness index greater than about 55 %.

In some embodiments, the weight ratio of the styrenic units to the conjugated diene units is not particularly limited, but 20:80 to 60:40. In the present disclosure, the weight ratio of the styrenic units to the conjugated diene units is determined by proton nuclear magnetic resonance ($^1$H-NMR) method.

The styrene-based copolymer has a blockiness index greater than about 55 %, indicating that the styrenic units are predominantly arranged in continuous segments rather than randomly distributed along the polymer chain. In some embodiments, the blockiness index may be greater than or equal to about 60 %, greater than or equal to 70%, greater than or equal to 75%, greater than or equal to about 80 %, greater than or equal to about 90 %, greater than or equal to 95%, or in a range of greater than about 55 % to about 60 %. In some embodiments, the blockiness index of the styrene-based copolymer in the disclosure may be in a range of about 60 % to about 99.5 %, in a range of about 70 % to about 99.5 %, in a range of about 75 % to about 99.5 %, in a range of about 80 % to about 99.5 %, in a range of about 90 % to about 99.5 %, or in a range of about 95 % to about 99.5 %. This segmental arrangement provides a favorable combination of mechanical, thermal, and dielectric properties. The styrenic segments impart rigidity and a high glass transition temperature, while the diene segments maintain sufficient elasticity, toughness, and flowability. As a result, the copolymer exhibits improved toughness, dimensional stability, and processability, while reducing dielectric loss. In some embodiments, it further improves compatibility and adhesion with other resin components, and imparts high uniformity of the resin composition, thereby contributing to the overall performance and reliability of the metal foil laminated board.

The styrenic units are present in the amount of about 20 wt% to about 60 wt% based on the total weight of the styrene-based copolymer, meaning that the total weight of all structural units in the copolymer, including the styrenic units and other copolymerized units, is 100 wt%, and the styrenic units account for about 20 wt% to about 60 wt% of that total weight. In some embodiments, the styrenic units are present in the amount of about 40 wt% to about 60 wt%, about 30 wt% to about 50 wt%, or in the amount of about 20wt% to less than about 40 wt%. In some embodiments, the styrenic units of the disclosure may present in the amount of about 25wt% to 55wt%, in the amount of about 25wt% to 45wt%, in the amount of about 25wt% to 35wt%, in the amount of about 35wt% to 55wt%, or in the amount of about 45wt% to 55wt%. In some embodiments, the styrenic units of the disclosure may include 30wt%, 40wt% or 50wt%. Within the above-defined range, the styrenic unit content provides a balanced combination of dielectric, thermal, and mechanical properties. The styrenic units may form a styrene block. The styrene block may serve as a hard segment, providing a higher Tg and contributing to strength, hardness, and elevated temperature performance.

The term "conjugated diene units" used herein refers to units in a polymer chain of the styrene-based copolymer that are derived from conjugated diene monomers (compounds). Examples of the conjugated diene monomers may include, but are not limited to, butadiene, isoprene, myrcene, or a combination thereof. The term "butadiene" used herein refers to a compound (or monomer) having the following structure:

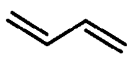,

also referred as 1,3-butadiene. The term "isoprene" used herein refers to a compound (or monomer) having the following structure:

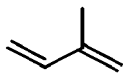,

also referred as 2-methyl-1,3-butadiene. The term "myrcene" used herein refers to a compound (or monomer) having the following structure:

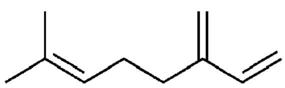,

also referred as 7-methyl-3-methylideneocta-1,6-diene. In some embodiments, the conjugated diene units may be selected from a group consisting of butadiene units, isoprene units, myrcene units, or a combination thereof.

The conjugated diene units may contain vinyl groups. The vinyl group refers to the pendant vinyl moiety located on the main polymer backbone formed by the conjugated diene units. In some embodiments, based on the total amount of the conjugated diene units, the vinyl content of the conjugated diene units may be greater than about 70 wt%. A higher vinyl content results in a higher curing density of the styrene-based copolymer, thereby enhancing its thermal resistance and dielectric performance.

In embodiments where the conjugated diene units are butadiene units, the butadiene units may include a 1,2-bonding structure of formula (1) and/or a 1,4-bonding structure of formula (2). In these embodiments, the molar ratio of the 1,2-bonding structure of formula (1) to the 1,4-bonding structure of formula (2) may range from 90:10 to 10:90.

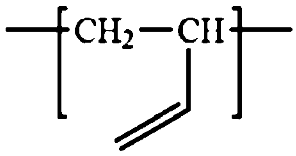

(1)

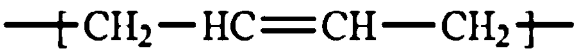

(2)

In some embodiments, the butadiene units may further include the cyclic structure of formula (3).

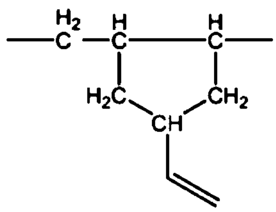

(3)

.

In some embodiments, 1,2-vinyl content (i.e., the amount of the 1,2-bonding structure of formula (1)) of the styrene-based copolymer may be greater than about 70 wt% based on the total amount of the butadiene units. In some embodiments, the 1,2-vinyl content of the styrene-based copolymer may be in a range of about 75 wt% to about 85 wt%. In some embodiments, the cyclic content (i.e., the amount of the cyclic structure of formula (3)) of the styrene-based copolymer may be equal to or less than about 14 % based on the total amount of the butadiene units. In some embodiments, the cyclic content may be equal to or less than about 10 %, equal to or less than about 7 %, in the range of about 3% to 7%, in the range of about 3% to 6%, or in the range of about 5% to 6%, providing improved dielectric properties.

In some embodiments, the conjugated diene units may form a conjugated diene block. The conjugated diene block may contain functional groups (such as vinyl groups) and may serve as a soft segment for curing, contributing to elasticity, toughness, and resilience. In further embodiments, the conjugated diene block comprises butadiene units. In some embodiments, 1,2-vinyl content of the conjugated diene block may be greater than about 70 wt% based on the total amount of the butadiene unit in the conjugated diene block. In some embodiments, the cyclic content of the conjugated diene block may be equal to or less than about 14 % based on the total amount of the butadiene units in the conjugated diene block. In some embodiments, the cyclic content of the conjugated diene block may be equal to or less than about 10 %, equal to or less than about 7 %, in the range of about 3% to 7%, in the range of about 3% to 6%, or in the range of about 5% to 6% based on the total amount of the butadiene units in the conjugated diene block. The molar ratio of the structures of formula (1) and formula (2), the vinyl content, and the cyclic content (the amount of the cyclic structure of formula (3)) may be determined by proton nuclear magnetic resonance ($^1$H-NMR) analysis.

The term "styrenic units" used herein refers to units in a polymer chain of the styrene-based copolymer that are derived from styrenic monomers (compounds). Examples of the styrenic monomers may include unsubstituted styrene or substituted styrene. The term "styrenic monomer" used herein refers to a compound (or monomer) having the following structure:

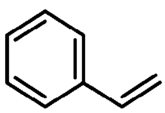

.

Examples of the substituted styrenes may include, but are not limited to, α-methylstyrene, p-methylstyrene, o-methylstyrene, m-methylstyrene, tert-butylstyrene, vinyltoluene, or a combination thereof. In some embodiments, the styrenic units may be selected from a group consisting of styrene units, α-methylstyrene units, p-methylstyrene units, o-methylstyrene units, m-methylstyrene units, tert-butylstyrene units, vinyltoluene units, and combinations thereof.

In some embodiments, the styrene-based copolymer may include a conjugated diene block and at least one styrene block, but the number of block is not particularly limited. In some embodiments, the styrene-based copolymer may consist of two or three blocks. In some embodiments, the blockiness index of such styrene-based copolymer may be greater than about 55 %. In some embodiments, the blockiness index of such styrene-based copolymer may be greater than about 80 %, and this structure allows the styrene-based copolymer to achieve an optimal balance of mechanical, thermal, and dielectric properties, and optimize the uniformity of the prepreg or the resin-coated copper foil, thereby improving the toughness, dimensional stability, and processability of the final metal-foil-laminated board.

In some embodiments, the styrene-based copolymer may be a diblock copolymer, providing superior electrical performance. In some embodiments, the styrene-based copolymer may be a styrene-butadiene diblock copolymer (SB) including a styrene block and a butadiene block. In these embodiments, the weight ratio of the styrene block to the butadiene block is not particularly limited, but may range from 20:80 to 60:40. In other embodiments, the styrene-based copolymer may be a styrene-isoprene diblock copolymer (SI) including a styrene block and an isoprene block. The weight ratio of the styrene block to the isoprene block is not particularly limited, but may range from 20:80 to 40:60. In some embodiments, the styrene-based copolymer may be a styrene-butadiene/isoprene diblock copolymer (S-B/I) including a styrene block and a butadiene/isoprene block. The weight ratio of the styrene block to the butadiene/isoprene block is not particularly limited, but may range from 20:80 to 60:40. In some embodiments, the styrene-based copolymer may be a styrene-butadiene/myrcene diblock copolymer (S-B/M) including a styrene block and a butadiene/myrcene block. The weight ratio of the styrene block to the butadiene/myrcene is not particularly limited, but may range from 20:80 to 60:40. In some embodiments, the styrene-based copolymer may be a styrene- styrene /butadiene diblock copolymer (S-S/B) including a styrene block and a styrene /butadiene block. The weight ratio of the styrene block to the styrene /butadiene is not particularly limited, but may range from 20:80 to 60:40. In some embodiments, the styrene-based copolymer may be a styrene/butadiene - butadiene diblock copolymer (S/B-B) including a styrene block and a styrene /butadiene block. The weight ratio of the styrene/butadiene block to the butadiene block is not particularly limited, but may range from 20:80 to 60:40. In some embodiments, the styrene-based copolymer may be a styrene/butadiene - styrene/butadiene diblock copolymer (S/B-S/B) including a styrene/butadiene block primarily composed of styrene and a styrene/butadiene block primarily composed of butadiene. The weight ratio of the styrene/butadiene block primarily composed of styrene to the styrene/butadiene block primarily composed of butadiene is not particularly limited, but may range from 20:80 to 60:40.

In some embodiments, the styrene-based copolymer may be a triblock copolymer. In some embodiments, the styrene-based copolymer may be a styrene-butadiene-isoprene block copolymer (S-B-I) or a styrene-isoprene-butadiene block copolymer (S-I-B) including a styrene block, a butadiene block, and an isoprene block. In some embodiments, the styrene-based copolymer may be a styrene-butadiene-styrene block copolymer (SBS) including styrene blocks and a butadiene block. In some embodiments, the styrene-based copolymer may be a butadiene-styrene-butadiene block copolymer (BSB) including a styrene block and butadiene blocks. In some embodiments, the styrene-based copolymer may be a styrene-isoprene-styrene block copolymer (SIS) including styrene blocks and an isoprene block. In these embodiments, the weight ratio of the sum of the styrene block to the sum of the butadiene and/or isoprene blocks is not particularly limited, but may range from 20:80 to 60:40. In some embodiments, the styrene-based copolymer may be a triblock copolymer comprising butadiene units, and the cyclic content of the styrene-based copolymer may be equal to or less than about 14 % based on the total amount of the butadiene units.

In some embodiments, the styrene-based copolymer of the present disclosure may further include a randomized region.

In some embodiments, the amount of the styrene block may be in a range of about 20 wt% to about 60 wt%, and the amount of the conjugated diene block may be in a range of about 40 wt% to about 80 wt%, based on the total weight of the styrene-based copolymer. In some embodiments, the content of the styrene block may be in a range of about 30 wt% to about 50 wt%, 40 wt% to about 60 wt%, or less than about 40 wt%,based on the total weight of the styrene-based copolymer. In some embodiments, the weight ratio of the styrene block to the conjugated diene block is not particularly limited, but 20:80 to 60:40. In the present disclosure, the weight ratio of the styrene block to the conjugated diene block is determined by proton nuclear magnetic resonance ($^1$H-NMR) method.

In some embodiments, the styrene-based copolymer may include at least one block including styrenic units and conjugated diene units, such as a styrene/butadiene block, a styrene/isoprene block, or a styrene/myrcene block. In some embodiments, the styrene block is a block including styrenic units and conjugated diene units, wherein the styrenic units are present higher than 50% based on the total weight of the styrene block. In some embodiments, the conjugated diene block is a block including styrenic units and conjugated diene units, wherein the conjugated diene units are present higher than 50% based on the total weight of the conjugated diene block. In some embodiments, the styrene-based copolymer may include at least one block including styrenic units and conjugated diene units, and the blockiness index of such

styrene-based copolymer may be greater than 55%. In some embodiments, the styrene-based copolymer may include at least one block including styrenic units and conjugated diene units, and the blockiness index of such styrene-based copolymer may be in a range of greater than 55 % to 60 %, and this structure allows the styrene-based copolymer to retain partial segmental arrangement, providing a balance of rigidity and elasticity within the same block. As a result, the styrene-based copolymer exhibits good toughness, resilience, and flowability, which enhances processability while maintaining satisfactory uniformity, and mechanical and dielectric properties.

In some embodiments, the styrene-based copolymer is in a liquid state at about 25 °C, contributing to its flowability and compatibility in manufacturing process. In some embodiments of the present disclosure, the styrene-based copolymer has a polydispersity index (PDI) in a range of about 1.0 to about 1.20. In some embodiments, the styrene-based copolymer may have a weight average molecular weight that is equal to or less than about 10,000 g/mol, providing the improvement of processability during the CCL manufacturing process. Specifically, the styrene-based copolymer has a weight average molecular weight of about 5,000 g/mol to about 6,000 g/mol. In some embodiments, the weight average molecular weight may be in a range of about 5,000 g/mol to about 9,500 g/mol, in a range of about 5,300 g/mol to about 9,500 g/mol, in a range of about 5,300 g/mol to about 6,000 g/mol, or in a range of about 5,300 g/mol to about 5,800 g/mol. The molecular weight and the polydispersity index described above are determined by gel permeation chromatography (GPC).

In some embodiments, the styrene-based copolymer for preparing a low dielectric resin composition having a dielectric loss tangent (Df) in the range of less than 0.00180 and higher than 0.00170, comprises styrenic units; conjugated diene units, and wherein the styrenic units are present in an amount of from 20 to less than 40 wt% based on the total weight of the styrene-based copolymer, and the styrene-based copolymer has a blockiness index greater than 55%. In further embodiments, the blockiness index of the styrene-based copolymer for preparing a low dielectric resin composition having a dielectric loss tangent (Df) in the range of less than 0.00180 and higher than 0.00170 is equal or greater than 80%, optimizing the uniformity of the prepreg or the resin-coated copper foil, thereby improving the toughness, dimensional stability, and processability of the final metal-foil-laminated board. In some embodiments, the styrene-based copolymer for preparing a low dielectric resin composition having a dielectric loss tangent (Df) in the range of less than 0.00180 and higher than 0.00170 is a diblock copolymer.

In some embodiments, the styrene-based copolymer for preparing a low dielectric resin composition having a dielectric loss tangent (Df) in the range of equal or less than 0.00170, comprises styrenic units; conjugated diene units, and wherein the styrenic units are present in an amount of from 40 wt% and 60 wt% based on the total weight of the styrene-based copolymer, and the styrene-based copolymer has a blockiness index greater than 55%. For optimizing the uniformity, the block structure and the blockiness index of the selected styrene-based copolymer are of importance. In some embodiments, the styrene-based copolymer for preparing a low dielectric resin composition having a dielectric loss tangent (Df) in the range of equal or less than 0.00170 is composed of a conjugated diene block and at least one styrene block, but the number of block is not particularly limited; and the blockiness index of the styrene-based copolymer is greater than 80%, improving the uniformity of the prepreg or the resin-coated copper foil. In other embodiments, the styrene-based copolymer for preparing a low dielectric resin composition having a dielectric loss tangent (Df) in the range of equal or less than 0.00170 comprises at least one block including styrenic units and conjugated diene units, and the blockiness index is in the range of greater than 55% to 60%, improving the uniformity of the prepreg or the resin-coated copper foil.

The styrene-based copolymer described above exhibits a blocky arrangement of styrenic and conjugated diene units, as reflected by its high blockiness index, and has specific styrenic content. These structural features may provide high uniformity and/or a low dielectric loss tangent (Df), which contribute to consistent material performance and enhanced electrical properties of the styrene-based copolymer. In some embodiments, the styrene-based copolymer may be used for preparing a low dielectric resin composition having a dielectric loss tangent (Df) of less than 0.00200. In some embodiments, the styrene-based copolymer may be used for preparing a low dielectric resin composition having a dielectric loss tangent (Df) of less than or equal to 0.00180. In some embodiments, the styrene-based copolymer may be used for preparing a low dielectric resin composition having a dielectric loss tangent (Df) of less than or equal to 0.00170.

An embodiment of the present disclosure provides a styrene-based copolymer includes a styrene block and a conjugated diene block. The styrene block refers to the block primarily composed of styrenic unit, and the conjugated diene block refers to the block primarily composed of conjugated diene units. The styrene block may serve as a hard segment, providing a higher Tg and contributing to strength, hardness, and elevated temperature performance, while the conjugated diene block may contain functional groups (such as vinyl groups) and may serve as a soft segment for curing, contributing to elasticity, toughness, and resilience. The content of the styrene block may be in a range of about 20 wt% to about 60 wt% based on the total weight of the styrene-based copolymer, and the styrene-based copolymer has a glass transition temperature equal to or greater than -20 °C, a structural feature that ensures excellent dielectric properties and high uniformity in the metal foil laminated board. In some embodiments, the glass transition temperature may be greater than or equal to about -18 °C, in a range of about -17.5 °C to about 15 °C, in a range of about -17.5 °C to about 10 °C, or in a range of about -17.5 °C to about 7 °C.

In some embodiments, a styrene-based copolymer includes a styrene block and a conjugated diene block, and the amount of the styrene block may be in a range of about 20 wt% to about 60 wt%, and the amount of the conjugated diene block may be in a range of about 40 wt% to about 80 wt%, based on the total weight of the styrene-based copolymer. In some embodiments, the content of the styrene block may be in a range of about 30 wt% to about 50 wt%, 40 wt% to about 60 wt%, or in a range of about 20 wt% to less than about 40 wt%, based on the total weight of the styrene-based copolymer. In some embodiments, the weight ratio of the styrene block to the conjugated diene block is not particularly limited, but 20:80 to 60:40. In the present disclosure, the weight ratio of the styrene block to the conjugated diene block is determined by proton nuclear magnetic resonance ($^1$H-NMR) method.

In some embodiments, a styrene-based copolymer includes a styrene block and a conjugated diene block, and the conjugated diene block may include conjugated diene units above, but the present disclosure is not limited thereto. In some embodiments, the conjugated diene units may be selected from a group consisting of butadiene units, isoprene units, myrcene units, or a combination thereof. The conjugated diene units may contain vinyl groups. The vinyl group refers to the pendant vinyl moiety located on the main polymer backbone formed by the conjugated diene units. In some embodiments, based on the total amount of the conjugated diene units, the vinyl content of the conjugated diene units may be greater than about 70 wt%. A higher vinyl content results in a higher curing density of the styrene-based copolymer, thereby enhancing its thermal resistance and dielectric performance.

In embodiments, a styrene-based copolymer includes a styrene block and a conjugated diene block, and the styrene-based copolymer comprises conjugated diene units, where the conjugated diene units are butadiene units. The butadiene units may include a 1,2-bonding structure of formula (1) and/or a 1,4-bonding structure of formula (2), each as described above. In these embodiments, the molar ratio of the 1,2-bonding structure of formula (1) to the 1,4-bonding structure of formula (2) may range from 90:10 to 10:90. In some embodiments, the butadiene units may further include the cyclic structure of formula (3) as described above.

In some embodiments, a styrene-based copolymer includes a styrene block and a conjugated diene block, and the conjugated diene block includes butadiene units, wherein the 1,2-vinyl content of the styrene-based copolymer may be greater than about 70 wt% based on the total amount of the butadiene unit in the conjugated diene block. In some embodiments, the 1,2-vinyl content of the styrene-based copolymer may be in a range of about 75 wt% to about 86 wt% based on the total amount of the butadiene unit in the conjugated diene block. In some embodiments, the cyclic content of the styrene-based copolymer may be equal to or less than about 14 %, equal to or less than about 10 %, or equal to or less than about 7 % based on the total amount of the butadiene units, providing improved dielectric properties. The molar ratio of the structures of formula (1) and formula (2), the vinyl content, and the cyclic content (the amount of the cyclic structure of formula (3) in the conjugated diene block) may be determined by proton nuclear magnetic resonance ($^1$H-NMR) analysis.

In some embodiments, a styrene-based copolymer includes a styrene block and a conjugated diene block, and the styrene block may include styrenic units above, but the present disclosure is not limited thereto. In some embodiments, the styrenic units may be selected from a group consisting of styrene units, $\alpha$-methylstyrene units, p-methylstyrene units, o-methylstyrene units, m-methylstyrene units, tert-butylstyrene units, vinyltoluene units, and combinations thereof. In some embodiments, the styrenic units are present in the amount of about 20 wt% to about 60 wt% based on the total weight of the styrene-based copolymer, meaning that the total weight of all structural units in the copolymer, including the styrenic units and other copolymerized units, is 100 wt%, and the styrenic units account for about 20 wt% to about 60 wt% of that total weight. In some embodiments, the styrenic units are present in the amount of about 40 wt% to about 60 wt%, about 30 wt% to about 50 wt%, or is in the amount of about 20 wt% to less than about 40 wt%. Within the above-defined range, the styrenic unit content provides a balanced combination of dielectric, thermal, and mechanical properties.

The styrene-based copolymer including a styrene block and a conjugated diene block may have a blockiness index of greater than or equal to about 55%. In some embodiments, the blockiness index may be greater than or equal to about 80 %, greater than or equal to about 91 %, in a range of greater than 55 % to 60 %, or in a range of about 55 % to about 60 %. In some embodiments, the blockiness index may be greater than or equal to about 80 %, while the styrenic units are present in an amount of less than 40 wt% based on the total weight of the styrene-based copolymer. In some embodiments, the blockiness index may be greater than or equal to about 80 %, while the styrenic units are present in an amount of about 20 wt% to less than 40 wt% based on the total weight of the styrene-based copolymer. In some embodiments, the blockiness index may be greater than or equal to about 80 %, while the styrenic units are present in the amount of 40 wt% to 60 wt% based on the total weight of the styrene-based copolymer.

In some embodiments, the styrene-based copolymer includes a styrene block and a conjugated diene block, wherein the styrene-based copolymer may include at least one block including styrenic units and conjugated diene units, and the blockiness index of such styrene-based copolymer may greater than 55 %. In some embodiments, the styrene-based copolymer includes a styrene block and a conjugated diene block, wherein the styrene-based copolymer may include at least one block including styrenic units and conjugated diene units, and the blockiness index of such styrene-based copolymer may greater than 55 % to 60 %; the styrene-based copolymer with the above blockiness index may exhibit improved toughness, dimensional stability, and processability, while reducing dielectric loss and enhancing compatibility and adhesion with other resin components, and imparts high uniformity of the resin composition , thereby

contributing to the overall performance and reliability of the metal foil laminated board.

In some embodiments, the styrene-based copolymer including a styrene block and a conjugated diene block comprises styrenic units, and conjugated diene units; wherein, the weight ratio of the styrenic units to the conjugated diene units in the styrene-based copolymer is not particularly limited, but 20:80 to 60:40. In the present disclosure, the weight ratio of the styrenic units to the conjugated diene units in the styrene-based copolymer is determined by proton nuclear magnetic resonance ($^1$H-NMR) method.

In some embodiments, the styrene-based copolymer including a styrene block and a conjugated diene block may consist of two or three blocks. In some embodiments, the styrene-based copolymer including a styrene block and a conjugated diene block may be a diblock copolymer, exhibiting an excellent molecular arrangement and further optimizes the uniformity of the prepreg or the resin-coated copper foil using the same. In some embodiments, the styrene-based copolymer including a styrene block and a conjugated diene block may be selected from a group consisting of: a styrene-butadiene diblock copolymer (SB), a styrene-isoprene diblock copolymer (SI), a styrene-butadiene/isoprene diblock copolymer (S-B/I), a styrene-butadiene/myrcene diblock copolymer (S-B/M), a styrene- styrene /butadiene diblock copolymer (S-S/B), a styrene/butadiene - butadiene diblock copolymer (S/B-B), and a styrene/butadiene - styrene/butadiene diblock copolymer (S/B-S/B) including a styrene/butadiene block primarily composed of styrene and a styrene/butadiene block primarily composed of butadiene. In some embodiments, the styrene-based copolymer including a styrene block and a conjugated diene block may be a styrene-butadiene diblock copolymer (SB) including a styrene block and a butadiene block. In these embodiments, the weight ratio of the styrene block to the butadiene block is not particularly limited, but may range from 20:80 to 60:40. In some embodiments, the styrene-based copolymer including a styrene block and a conjugated diene block may be a styrene-butadiene/isoprene diblock copolymer (S-B/I) including a styrene block and a butadiene/isoprene block. The weight ratio of the styrene block to the butadiene/isoprene block is not particularly limited, but may range from 20:80 to 60:40. In some embodiments, the styrene-based copolymer including a styrene block and a conjugated diene block may be a styrene-butadiene/myrcene diblock copolymer (S-B/M) including a styrene block and a butadiene/myrcene block. The weight ratio of the styrene block to the butadiene/myrcene is not particularly limited, but may range from 20:80 to 60:40. In some embodiments, the styrene-based copolymer including a styrene block and a conjugated diene block may be a styrene- styrene /butadiene diblock copolymer (S-S/B) including a styrene block and a styrene /butadiene block. The weight ratio of the styrene block to the styrene /butadiene is not particularly limited, but may range from 20:80 to 60:40. In some embodiments, the styrene-based copolymer including a styrene block and a conjugated diene block may be a styrene/butadiene - styrene/butadiene diblock copolymer (S/B-S/B) including a styrene/butadiene block primarily composed of styrene and a styrene/butadiene block primarily composed of butadiene. The weight ratio of the styrene/butadiene block primarily composed of styrene to the styrene/butadiene block primarily composed of butadiene is not particularly limited, but may range from 20:80 to 60:40.

In some embodiments, the styrene-based copolymer including a styrene block and a conjugated diene block may be a triblock copolymer. In some embodiments, the styrene-based copolymer may be selected from a group consisting of: a styrene-butadiene-isoprene block copolymer (S-B-I), a styrene-isoprene-butadiene block copolymer (S-I-B), a styrene-butadiene-styrene block copolymer (SBS), a butadiene-styrene-butadiene block copolymer (BSB), and a styrene-isoprene-styrene block copolymer (SIS). In these embodiments, the weight ratio of the sum of the styrene block to the sum of the butadiene and/or isoprene blocks is not particularly limited, but may range from 20:80 to 60:40. In some embodiments, the styrene-based copolymer including a styrene block and a conjugated diene block may be a triblock copolymer comprising butadiene units, and the cyclic content of the styrene-based copolymer may be equal to or less than about 14 % based on the total amount of the butadiene units.

In some embodiments, the styrene-based copolymer including a styrene block and a conjugated diene block is in a liquid state at about 25 °C, contributing to its flowability in manufacturing process. In some embodiments of the present disclosure, the styrene-based copolymer including a styrene block and a conjugated diene block has a polydispersity index (PDI) in a range of about 1.0 to about 1.20, or about 1.0 to about 1.10. In some embodiments, the styrene-based copolymer including a styrene block and a conjugated diene block may have a weight average molecular weight that is equal to or less than about 10,000 g/mol, providing the improvement of processability during the CCL manufacturing process. Specifically, the styrene-based copolymer has a weight average molecular weight of about 5,000 g/mol to about 6,000 g/mol. The molecular weight and the polydispersity index described above are determined by GPC.

In comparison with other materials having similar physical properties, such as styrene random copolymers or styrene-based copolymers with lower Tg, the styrene-based copolymer of the present disclosure may further exhibit superior thermal properties, thereby meeting the dielectric and mechanical standards of the CCL and enhancing thermal stability throughout the CCL manufacturing process.

In some embodiments, the styrene-based copolymer for preparing a low dielectric resin composition having a dielectric loss tangent (Df) in the range of less than 0.00180 and higher than 0.00170, comprises a styrene block; a conjugated diene block, and wherein the styrene-based copolymer comprises styrenic units, and the styrenic units are present in an amount of less than 40 wt% based on the total weight of the styrene-based copolymer. In further embodiments, the blockiness index of the styrene-based copolymer including a styrene block and a conjugated diene

block for preparing a low dielectric resin composition having a dielectric loss tangent (Df) in the range of less than 0.00180 and higher than 0.00170 is equal or greater than 80%, optimizing the uniformity of the prepreg or the resin-coated copper foil, thereby improving the toughness, dimensional stability, and processability of the final metal-foil-laminated board. In some embodiments, the styrene-based copolymer including a styrene block and a conjugated diene block for preparing a low dielectric resin composition having a dielectric loss tangent (Df) in the range of less than 0.00180 and higher than 0.00170 is a diblock copolymer.

In some embodiments, the styrene-based copolymer for preparing a low dielectric resin composition having a dielectric loss tangent (Df) in the range of equal or less than 0.00170, comprises a styrene block; a conjugated diene block, and wherein the styrene-based copolymer comprises styrenic units, and the styrenic units are present in an amount of from 40 wt% and 60 wt% based on the total weight of the styrene-based copolymer. For optimizing the uniformity of the prepreg or the resin-coated copper foil, the block structure and the blockiness index of the selected styrene-based copolymer are of importance. In some embodiments, the styrene-based copolymer including a styrene block and a conjugated diene block for preparing a low dielectric resin composition having a dielectric loss tangent (Df) in the range of equal or less than 0.00170 has the blockiness index greater than 80%, improving the uniformity of the prepreg or the resin-coated copper foil. In other embodiments, the styrene-based copolymer including a styrene block and a conjugated diene block for preparing a low dielectric resin composition having a dielectric loss tangent (Df) in the range of equal or less than 0.00170 comprises at least one block including styrenic units and conjugated diene units, and the blockiness index is in the range of greater than 55% to 60%, improving the uniformity of the prepreg or the resin-coated copper foil.

A method for producing any one of the styrene-based copolymers of the present disclosure is not particularly limited. For example, the styrene-based copolymer may be produced by the methods described in Japanese Unexamined Patent Application Publication No. 1994-192502, Japanese Unexamined Patent Application Publication (Translation of PCT Application) No. 2000-514122, and Japanese Unexamined Patent Application Publication No. 2007-302901, or by an analogous method. In some embodiments, any one of the styrene-based copolymers of the present disclosure may be produced by following steps: purifying the styrenic monomers and the conjugated diene monomers under inert atmosphere; introducing the styrenic monomers; introducing the conjugated diene monomers; and terminating the reaction, whereby the styrene-based copolymer can be obtained.

A resin composition including at least one of the styrene-based copolymers described above may be provided. In some embodiments, the styrene-based copolymer described above is present in the amount of about 5 wt% to about 20 wt% based on the total weight of the resin composition. In some embodiments, the styrene-based copolymer described above is present in the amount of about 9 wt% to about 18 wt% based on the total weight of the resin composition. As described above, the styrene-based copolymer exhibits excellent compatibility and curing reactivity with other components in the resin composition. In some embodiments, the styrene-based copolymer having a weight average molecular weight equal to or less than 10,000 g/mol may act as a buffer under impact. Therefore, a resin composition containing at least one of the aforementioned styrene-based copolymers can be used to manufacture a prepreg with ultra-low dielectric loss and improved toughness.

In some embodiments, the resin composition may further include a hydrocarbon resin. The hydrocarbon resin, composed of carbon and hydrogen atoms, may exhibit low dielectric loss due to the limited number of polar functional groups. In the present disclosure, the hydrocarbon resin includes non-polar aromatic units, which provide good thermal stability and superior oxidation resistance during heating processes compared to hydrocarbon resins lacking such units. The resin composition including the hydrocarbon resin may show good electrical performance and good thermal performance after heating processes. In some embodiments, based on the total weight of the resin composition, the resin composition may include about 30 wt% to about 90 wt% of the hydrocarbon resin.

In some embodiments, the hydrocarbon resin may be an olefin-aromatic vinyl compound-aromatic polyene copolymer. In some embodiments, a known or commercially available hydrocarbon resin product may also be used. In certain embodiments, the hydrocarbon resin of the present disclosure may be a polymer described in U.S. Patent Application No. 18/128,716, which is incorporated herein by reference in its entirety. In other embodiments, the hydrocarbon resin may include 0 mol% to about 40 mol% of repeating units (A) derived from a bridged-ring monomer compound, about 15 mol% to about 92 mol% of repeating units (B) derived from a mono-vinyl aromatic compound, and about 8 mol% to about 80 mol% of repeating units (C) derived from a divinyl aromatic compound.

The term "bridged-ring monomer compound" used herein refers to compounds that have bridged ring structures and can be polymerized with the same compounds or different compounds to form polymers. The bridged ring structure refers to a structure having at least two carbocycles, and the at least two carbocycles share two carbon atoms that are not directly connected. In some embodiments of this disclosure, the bridged ring structure in the bridged ring monomer compound may include 3-12 ring atoms and 1-2 double bonds. In some embodiments, the bridged ring structure can be unsubstituted. In some embodiments, at least one hydrogen atom on the bridged ring structure can be substituted by at least one substituent selected from a group consisting of a $C_{1-20}$ alkyl group, a $C_{2-20}$ alkenyl group, and a carboxylate group having $C_{1-20}$ alkyl chain group. In some embodiments, the bridged ring structure may have at least two substituents. The at least two substituents may be any two substituents selected from a group consisting of $C_{1-20}$ alkyl group, a $C_{2-20}$ alkenyl

group, and a carboxylate group having $C_{1-20}$ alkyl chain group. Adjacent substituents among the at least two substituents may together form a ring. For examples, the bridged ring monomer compound is selected from a group consisting of a norbornene (NB), a dicyclopentadiene (DCPD), a dicycloheptadiene (NBD), a 5-acetyl-2-norbornene, a methyl 5-norbornene-2-carboxylate, a vinyl norbornene, and an ethylidene-norbornene; but the disclosure is not limited thereto.

Compared with linear repeating units, the repeating units (A) having the bridged ring structures have higher rigidity. Therefore, it can increase the glass transition temperature of the resin composition or improve the thermal performance of the resin composition. When the content of the repeating units (A) in the hydrocarbon resin is too high, for example, above 40 mol%, the cost-effectiveness of the hydrocarbon resin will be reduced. In some embodiments, the hydrocarbon resin of the present disclosure may include 0 mol% to about 38 mol%, 0 mol% to about 30mol%, 0 mol% to about 25 mol%, 0 mol% to about 20 mol%, about 20 mol% to about 40mol%, about 20 mol% to about 38 mol%, about 20 mol% to about 30 mol%, or about 20 mol% to about 25 mol% of the repeating units (A). In some embodiments, the hydrocarbon resin of the disclosure may include about 3mol%, about 5 mol%, about 7 mol%, about 9 mol%, about 10 mol%, about 20mol%, about 22 mol%, about 25mol%, about 30mol%, about 32 mol%, about 35mol%, or about 38mol% of the repeating units (A).

The term "mono-vinyl aromatic compound" used herein refers to a compound including a carbocyclic aromatic structure, and one hydrogen on a ring carbon atom of the carbocyclic aromatic structure is substituted by a vinyl group. In some embodiments, the vinyl group may be unsubstituted. In some embodiments, at least one hydrogen atom on the vinyl group may be substituted by a $C_{1-20}$ alkyl group. In some embodiments, the carbocyclic aromatic structure may include 6 to 60 or 6 to 20 ring carbon atoms. In some embodiments, the carbocyclic aromatic structure may be unsubstituted. In some embodiments, at least one hydrogen on the ring carbon atom in the carbocyclic aromatic structure may be substituted by a $C_{1-20}$ alkyl group. Examples of the monovinyl aromatic compound may include, but are not limited to, a styrene, a methylstyrene, an ethylstyrene(EVB), and combination thereof.

The repeating unit (B) can increase the solubility of the hydrocarbon resin in organic solvents such as toluene. In one embodiment, the hydrocarbon resin of the disclosure includes about 15 mol% to about 92 mol% of repeating units (B). When the content of the repeating units (B) in the hydrocarbon resin is too low, for example, less than about 15 mol%, the solubility of the hydrocarbon resin in the organic solvent is poor. When the content of the repeating units (B) in the hydrocarbon resin is too high, for example, higher than about 92 mol%, other properties of the hydrocarbon resin, such as its thermal properties, may deteriorate. In some embodiments, the hydrocarbon resin of the disclosure may include about 20 mol% to about 92 mol %, about 20 mol% to about 90 mol %, about 25 mol% to about 85 mol %, about 30 mol% to about 80 mol %, about 35 mol% to about 80 mol %, about 40 mol% to about 80 mol %, or about 45 mol% to about 80 mol % of repeating units (B). In some embodiments, the hydrocarbon resin of the disclosure may include about 46mol%, about 48mol%, about 50 mol %, about 55 mol %, about 60 mol %, about 67mol%, about 72mol%, about 76mol%, or about 78mol% of repeating units (B).

The term "divinyl aromatic compound" used herein refers to a compound including a carbocyclic aromatic structure, and two hydrogen on a ring carbon atom of the carbocyclic aromatic structure are substituted by vinyl groups. In some embodiments, the vinyl groups may be unsubstituted. In some embodiments, at least one hydrogen atom on the vinyl groups may be substituted by a $C_{1-20}$ alkyl group. In some embodiments, the carbocyclic aromatic structure may include 6 to 60 or 6 to 20 ring carbon atoms. In some embodiments, the carbocyclic aromatic structure may be unsubstituted. In some embodiments, at least one hydrogen on the ring carbon atom in the carbocyclic aromatic structure may be substituted by a $C_{1-20}$ alkyl group. Examples of the divinyl aromatic compound may include, but are not limited to, divinylbenzene (DVB), diisopropenylbenzene, or any combination thereof.

In some embodiments, the repeating units (C) may include crosslinking units and non-crosslinking units. In some embodiments, the repeating units (C) may include crosslinking units represented as follows:

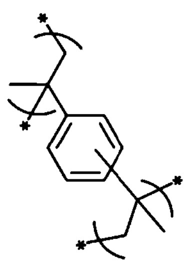

or

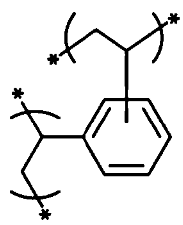

,

but the disclosure is not limited thereto. In some embodiments, the repeating units (C) may include non-crosslinking units represented as follows, but the disclosure is not limited thereto:

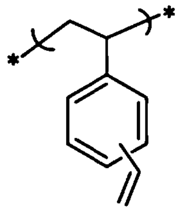
or
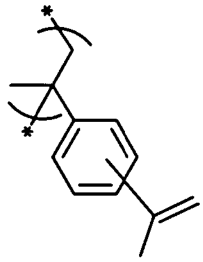
.

In the above structures, "*" represents a connecting site that connects other groups.

In some embodiments, a cross-linking degree of the repeating units (C) is 0.2 to 0.6. The range of cross-linking degree contributes to superior thermal and electrical properties without inducing the processability problem. The higher cross-linking degree of the hydrocarbon resin has, the better the thermal performance, thermal stability, and/or the electrical performance of the hydrocarbon resin; but its processability will be deteriorated when the cross-linking degree is higher than 0.6. In some embodiments, the cross-linking degree of the repeating units (C) may be 0.2 to 0.5; in some embodiments, the cross-linking degree of the repeating units (C) may be 0.3, 0.35, 0.4, or 0.45; but the present disclosure is not limited thereto. The cross-linking degree of the repeat units (C) is calculated by the following formula:

$$\frac{\text{the crosslinking units of the repeating units } (C)}{\text{the crosslinking units of the repeating units } (C) + \text{the non-crosslinking units of the repeating units } (C)}.$$

The cross-linking degree of the repeat units (C) is determined using $^{13}$C-NMR (Nuclear Magnetic Resonance, NMR) and $^{1}$H-NMR, with the sample prepared in $CDCl_3$.

The repeating units (C) can increase the cross-linking degree of the hydrocarbon resin. The higher cross-linking degree of the hydrocarbon resin has, the better the thermal performance, thermal stability, and/or the electrical performance of the hydrocarbon resin.

When the content of the repeating units (C) in the hydrocarbon resin is too low, for example, less than about 8 mol%, the cross-linking degree of the hydrocarbon resin is low, and the thermal and/or electrical performance of the hydrocarbon resin are poor. When the content of the repeating units (C) in the hydrocarbon resin is too high, for example, higher than about 80 mol%, the processability of the hydrocarbon resin will be deteriorated. In some embodiments, the hydrocarbon resin of the disclosure may include about 8 mol% to about 80 mol%, about 8 mol% to about 70 mol%, about 8 mol% to about 60 mol%, about 8 mol% to about 50 mol%, about 8 mol% to about 45 mol%, about 8 mol% to about 40mol%, or about 8 mol% to about 35mol% of repeating units (C). In some embodiments, the hydrocarbon resin of the disclosure may include about 8 mol%, about 9mol%, about 10mol%, about 11 mol%, about 12 mol%, about 16 mol%, about 20 mol%, about 30 mol%, about 32 mol%, about 35 mol%, about 40 mol%, or about 45 mol% of repeating units (C). In some embodiments, the sum of the repeating units (A) and the repeating units (C) is greater than or equal to about 8 mol%. In some embodiments, the sum of the repeating units (A) and the repeating units (C) is greater than or equal to about 13 mol% or even greater than or equal to about 15 mol%. As mentioned above, both the repeating units (A) and the repeating units (C) will affect the thermal properties and thermal stability of the hydrocarbon resin. The inventors found that when the sum of the repeating units (A) and the repeating units (C) is greater than or equal to about 8 mol%, a hydrocarbon resin has excellent thermal properties and thermal stability can be provided.

In some embodiments, reactive double bonds may be included in the hydrocarbon resin. The term "reactive double bond" used herein refers to the double bonds in the repeating units (A) or the repeating units (C) that can react with other compounds or polymers. For example, in some embodiments, the reactive double bonds include the double bonds in repeating units (A) represented as follows:

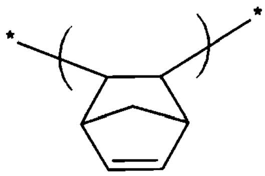, 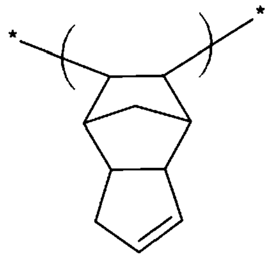,or 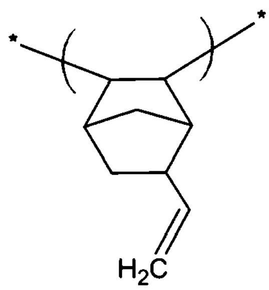;

and the double bond not in the benzene ring and in repeating units (C) represented as follows:

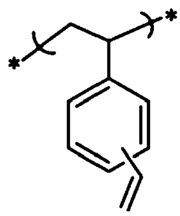 or 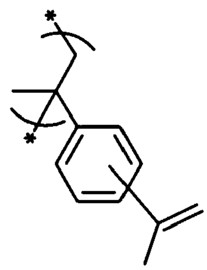,

but the disclosure is not limited thereto.

In some embodiments, the content of hydrogen atoms in the reactive double bonds of the hydrocarbon resin is less than 10%. When the hydrogen atom content in the reactive double bonds is too high, such as exceeding 10%, the hydrocarbon resin becomes susceptible to oxidation during heating, resulting in poor electrical properties. In some embodiments, the hydrogen atom content in the reactive double bonds is greater than 2.2%. In other embodiments, the hydrogen atom content is in a range of 2.2% to 10%, or preferably from 2.3% to 6.6%. When the hydrogen atom content is too low (less than 2.2%, for example), the peel strength of a layer containing the hydrocarbon resin becomes insufficient. In some embodiments, the hydrogen atom content in the reactive double bonds may be 2.3 % to 10 %, 2.3 % to 9 %, 2.3 % to 7 %, 2.3 % to 6 %, or 2.3 % to 4 %. When the hydrogen atom content in the reactive double bonds falls within one of the above ranges, the hydrocarbon resin is not easily oxidized and tends to complete the crosslinking reaction before oxidation occurs under high-temperature conditions (for example, above 150 °C). Therefore, the electrical performance of the hydrocarbon resin can be improved.

In some embodiments, a number average molecular weight (Mn) of the hydrocarbon resin may be about 2,500 g/mol to about 13,000 g/mol, determined by GPC. When the number average molecular weight of the hydrocarbon resin is too high, the solubility of the hydrocarbon resin would be decreased.

The hydrocarbon resin of the disclosure having the above features has good thermal performance, thermal stability, and/or good electrical performance. For example, in some embodiments, the hydrocarbon resin of the disclosure has a glass transition temperature that is greater than about 100°C, a dielectric constant (Dk) of less than about 3.4, a dielectric loss tangent (Df) of less than about 0.0030, a difference of the dielectric constants and/or a difference of the dielectric loss tangents before and after the heating process are small, and/or the dielectric loss tangent is less than about 0.0020 after the heating process.

The Dk/Df of hydrocarbon resin is analyzed by following method, comprising: dissolving about 20 g of a resin in about 20 g of a toluene to form a mixture; immersing a glass fiber cloths into the mixture for about 16 hours to form samples; and measuring the Dk/Df of the samples at 28 GHz by a network analyzer software (network analyzer Keysight, P5007A, SCR). The glass transition temperature of the hydrocarbon resin is measured by dynamic mechanical analysis (DMA, TA/Q800).

In addition, the hydrocarbon resin of the disclosure also has good solubility and/or processability. Therefore, the hydrocarbon resin of the disclosure can be easily dissolved in a solvent to form a resin composition having good thermal performance, thermal stability, good electrical performance, and/or good processability.

In one embodiment of the present disclosure, the weight ratio of the hydrocarbon resin to the styrene-based copolymer (the hydrocarbon resin : the styrene-based copolymer) is from 10:1 to 1:1. In some embodiments, the weight ratio of the hydrocarbon resin to the styrene-based copolymer of the disclosure may be 100:12, 100:14, 100:17, 100:19, 100:21, or 100:23. In some embodiments, the weight ratio of the hydrocarbon resin to the styrene-based copolymer of the disclosure may be from 10:1to 4:1 or 100:14 to 100:21. In the embodiments that the weight ratio of the hydrocarbon resin to the styrene-based copolymer is in a range above, the resin composition may show excellent dielectric property and

mechanical properties.

In some embodiments, the resin composition may further include an additive to modify performance of the resin composition. In some embodiments, based on 100 parts by weight of the sum of the hydrocarbon resin and the styrene-based copolymer, the resin composition may include about 0.1 to about 50 parts by weight of the additive. The additive may be selected from a group consisting of an initiator, a flame retardant, an inorganic filler, a crosslinking aid, or a combination thereof. In the present disclosure, the initiator, the flame retardant, the inorganic filler, and the crosslinking aid are not particularly limited.

In some embodiments, the initiator may be a peroxide-type compound. Examples of the initiator may include benzoyl peroxide, cumene hydroperoxide, 2,5-dimethylhexane-2,5-dihydroperoxide, 2,5-dimethyl-2,5-di(t-butylperoxy) hexine-3, di-t-butyl peroxide, t-butylcumyl peroxide, α,α-bis(t-butylperoxy-m-isopropyl)benzene, 2,5-dimethyl-2,5-di(t-butylperoxy)hexane, dicumyl peroxide, di-t-butyl peroxyisophthalate, t-butyl peroxybenzoate, 2,2-bis(t-butylperoxy)butane, 2,2-bis(t-butylperoxy)octane, 2,5-dimethyl-2,5-di(benzoylperoxy)hexane, di(trimethylsilyl)peroxide, trimethylsilyl triphenylsilyl peroxide, or a combination thereof, but the present disclosure is not limited thereto.

In some embodiments, based on 100 parts by weight of the sum of the hydrocarbon resin and the styrene-based copolymer, the resin composition may include about 0.1 to about 10 parts by weight of the initiator, but the present disclosure is not limited thereto.

Examples of the flame retardant may include a halogen-based flame retardant (such as a bromine-based flame retardant), a phosphorus-based flame retardant, or other suitable retardants, or a combination thereof, but the present disclosure is not limited thereto. Examples of the phosphorus-based flame retardant may include a phosphoric acid ester (such as a condensed phosphoric acid ester and a cyclic phosphoric acid ester), a phosphazene compound (such as a cyclic phosphazene compound), a phosphinate-based flame retardant (such as aluminum dialkyl phosphinate), a melamine-based flame retardant (such as melamine phosphate and melamine polyphosphate), or other suitable retardants, or a combination thereof, but the present disclosure is not limited thereto.

In some embodiments, based on 100 parts by weight of the sum of the hydrocarbon resin and the styrene-based copolymer, the resin composition may include about 1 to about 20 parts by weight of the phosphorus-based flame retardant, but the present disclosure is not limited thereto.

In the present disclosure, the styrene-based copolymer may act as a compatibilizer between the hydrocarbon resin and inorganic filler to prevent the problem of phase separation, thereby providing superior dielectric performance. Examples of the inorganic filler may include silica, alumina, talc, aluminum hydroxide, magnesium hydroxide, titanium oxide, mica, aluminum borate, barium sulfate, calcium carbonate, or other suitable materials, or any combination thereof, but the present disclosure is not limited thereto. In some embodiments, the inorganic filler may be post-modified with vinyl functional groups on its surface. In certain embodiments, based on 100 parts by weight of the inorganic filler, the amount of vinyl functional groups may range from about 0.1 to about 5 parts by weight. In some embodiments, the inorganic filler may be silica that is post-modified with at least one functional group selected from a group consisting of a vinyl group, an acrylate group, a methyl acrylate group, a thiol group, and an amino group.

In some embodiments, based on 100 parts by weight of the sum of the hydrocarbon resin and the styrene-based copolymer, the resin composition may include about 10 to about 50 parts by weight of the inorganic filler, but the present disclosure is not limited thereto. In some embodiments, based on 100 parts by weight of the sum of the hydrocarbon resin and the styrene-based copolymer, the resin composition may include about 20 to about 30 parts by weight of the inorganic filler.

The crosslinking aid may enhance a thermal property of the resin composition. Examples of the crosslinking aid may include triallyl cyanurate (TAC), triallyl isocyanurate (TAIC), trimethallyl isocyanurate (TMAIC), diallyl phthalate, or divinylbenzene (DVB), 1,2,4 - triallyl trimellitate, or a combination thereof, but the present disclosure is not limited thereto.

In some embodiments, based on 100 parts by weight of the sum of the hydrocarbon resin and the styrene-based copolymer, the resin composition may include about 1 to about 50 parts by weight of the crosslinking aid, but the present disclosure is not limited thereto.

In some embodiments, the resin composition includes both of the crosslinking aid and the initiator, wherein the initiator is a peroxide-type compound. In these embodiments, the crosslinking aid is divinylbenzene, triallyl isocyanurate (TAIC), or a combination thereof, but the present disclosure is not limited thereto.

The method for producing the resin composition is not particularly limited. In some embodiments, the resin composition may be prepared by mixing the hydrocarbon resin, the styrene-based copolymer, and optional additives (e.g., a crosslinking aid, an initiator, or an inorganic filler) with an organic solvent in a batch process. The organic solvent may be, for example, methyl ethyl ketone or toluene, although other suitable solvents may also be used. The mixing process may be performed either by simultaneous addition or sequential addition of the components. In some embodiments, the mixing process is carried out using a suitable blender selected according to the scale of production. In one embodiment, the mixing process is conducted at room temperature and continued until the components are fully dispersed.

An embodiment of the disclosure provides a prepreg manufactured from any of the resin compositions described above. The method for manufacturing the prepreg is not particularly limited. In some embodiments, the prepreg is

produced from a mixture of a fibrous base material and the resin compositions described above, or from a mixture of a fibrous base material and a resin varnish containing the resin compositions described above. In some embodiments, the method for manufacturing the prepreg may include the following steps: providing a resin varnish containing the resin composition described above; impregnating a fibrous base material with the resin varnish to form a mixture; and heating the mixture under desired heating conditions, for example, at about 100 °C to about 180 °C for about 1 minute to about 15 minutes, to remove the solvent and to semi-cure the resin, whereby a prepreg in a semi-cured state can be obtained.

Examples of the fibrous base material may include a glass fiber cloth, an aramid cloth, a polyester cloth, a glass nonwoven fabric, an aramid nonwoven fabric, a polyester nonwoven fabric, a pulp paper, a printer paper, other suitable materials, or any combination thereof, but the present disclosure is not limited thereto. In some embodiments, the fibrous base material may be a glass fiber cloth having a dielectric loss tangent (Df) of less than or equal to 0.0030.

In some embodiments, the resin varnish is prepared by a method for preparing the resin varnish. The method includes a dissolving step and a dispersing step. In some embodiments, the dissolving step includes dissolving the hydrocarbon resin, the styrene-based copolymer, and optional additives that are soluble in an organic solvent into the organic solvent until they are completely dispersed. In some embodiments, the dispersing step includes adding and dispersing optional additives that are insoluble in the organic solvent (such as inorganic fillers) using a ball mill, a bead mill, a planetary mixer, a roll mill, other suitable devices, or any combination thereof until a predetermined dispersion state is achieved.

The prepreg of the present disclosure may have a dielectric loss tangent (Df) of less than 0.00200 and may be used to prepare a metal foil laminated board having a dielectric loss tangent (Df) of less than 0.00200. In some embodiments, the prepreg of the present disclosure may have a dielectric loss tangent (Df) of less than or equal to 0.00180 and may be used to prepare a metal foil laminated board having a dielectric loss tangent (Df) of less than or equal to 0.00180. In some embodiments, the prepreg of the present disclosure may have a dielectric loss tangent (Df) of less than or equal to 0.00170 and may be used to prepare a metal foil laminated board having a dielectric loss tangent (Df) of less than or equal to 0.00170.

An embodiment of the disclosure provides a resin-coated copper foil (RCC) manufactured from any of the resin compositions described above. The method for manufacturing the resin-coated copper foil is not particularly limited. In some embodiments, the resin-coated copper foil may be manufactured by coating the resin composition of the present disclosure on at least one surface of a metal foil. In some embodiments, the resin-coated copper foil may be manufactured by a method including the following steps: providing a resin varnish containing the resin composition described above; coating the resin varnish on at least one surface of a metal foil to form a resin layer; and curing the resin layer under desired heating conditions to obtain the resin-coated copper foil. In some embodiments, a well-known drying step may be further carried out after the curing step, if necessary. Examples of the metal foil may include, but are not limited to, a copper foil.

The method for coating the resin composition or the resin varnish on at least one surface of the metal foil is not particularly limited. Specifically, the method for coating includes: introducing the resin composition or the resin varnish into a coater device; and coating the resin composition or the resin varnish on at least one surface of the metal foil to a desired thickness. Examples of the coater device include a comma coater, a blade coater, a lip coater, a roll coater, a squeeze coater, a reverse coater, a transfer roll coater, a gravure coater, a spray coater, and the like, but the present disclosure is not limited thereto.

The resin-coated copper foil of the present disclosure includes the resin composition of the present disclosure, which exhibits excellent thermal, uniformity and mechanical properties compared to conventional metal foils.

An embodiment of the disclosure provides a metal foil laminated board includes the prepreg or the resin-coated copper foil described above. In some embodiments, the metal foil laminated board may include one or more layers of the resin-coated copper foil. In some embodiments, the metal foil laminated board can be a single-sided or double-sided metal-clad laminate by laminating one or more layers of the resin-coated copper foil. In some embodiments, the metal foil laminated board may include a prepreg that has a structure in which a metal foil is stacked on the top of the prepreg or the prepreg stack, and the stacked structure is integrally laminated by hot-press molding to obtain a single-sided or double-sided metal-clad laminate. In some embodiments, the metal foil laminated board may include a copper foil.

The hot-press conditions in the hot-press molding process may be appropriately set based on the thickness of the metal foil laminated board to be produced and the type of resin composition used in the prepreg or resin-coated copper foil. For example, the hot-press conditions may be set such that the temperature is about 170 °C to about 220 °C, the pressure is about 1.0 MPa to about 4.0 MPa, and the time is about 60 minutes to about 180 minutes.

In some embodiments, the metal foil laminated board has at least one properties selected from the group consisting of: a difference in the glass transition temperatures between heating cycles ($\Delta$Tg) less than or equal to 4 °C, a relative percentage change of the full width at half maximum of a tan$\delta$ peak between heating cycles ($\Delta$FWHM%) less than or equal to 4 %, , and combinations thereof. In some embodiments, the metal foil laminated board has a difference in glass transition temperatures ($\Delta$Tg) between heating cycles less than or equal to 4 °C, determined by tan$\delta$ in Dynamic mechanical analysis (DMA). The term "$\Delta$Tg" is used as an indicator of uniformity in the metal foil laminated board. A lower $\Delta$Tg value indicates improved compatibility between components in the composition due to reduced difference of

energy requirements for the crosslinking reaction beetween different heating cycles, and imparts high uniformity of the prepreg, thereby contributing to the overall performance and reliability of the metal foil laminated board. In some embodiments, the difference in the glass transition temperatures (ΔTg) between heating cycles of the metal foil laminated board is less than 4 °C. In some embodiments, the difference in the glass transition temperatures (ΔTg) between heating cycles of the metal foil laminated board is less than 3 °C. Moreover, the metal foil laminated board has a relative percentage change of the full width at half maximum (ΔFWHM%) of a tanδ peak between heating cycles less than or equal to 4 %, determined by Dynamic mechanical analysis (DMA). The term "relative percentage change of the full width at half maximum (ΔFWHM%)" is also served as an indicator of uniformity in the metal foil laminated board. A lower ΔFWHM% value indicates higher uniformity of the metal foil laminated board. In some embodiments, the full width at half maximum (FWHM) of the styrene-based copolymer of a tan δ peak is equal or less than 4 %. In some embodiments, the full width at half maximum (FWHM) of the styrene-based copolymer of a tan δ peak is equal or less than 2 %. In some embodiments, the full width at half maximum (FWHM) of the styrene-based copolymer of a tan δ peak is equal or less than 1 %.

An embodiment of the disclosure provides a method for manufacturing a metal foil laminated board. The method includes forming a mixture comprising a hydrocarbon resin and any of the styrene-based copolymer of described above.

One or more embodiments of the disclosure will be described in detail with reference to the following examples. However, these examples are only used to illustrate the embodiments of the disclosure and are not intended to limit the scope of the embodiments of the disclosure.

[Preparation of styrene-based copolymers (triblock) S1-S3]

Under a high-purity nitrogen atmosphere, add about 2 kg to about 5 kg of a cyclohexane/n-hexane mixed solvent, about 0.05 kg to about 0.25 kg of styrenic monomers, tetrahydrofuran, and ether derivatives into a 10 L polymerization reactor according to the desired molar ratio. Initiate polymerization at room temperature by adding about 0.1 kg to about 0.2 kg of n-butyllithium. After completion of the styrene block polymerization, introduce about 0.5 kg to about 0.9 kg of conjugated diene monomers (i.e., isoprene and/or butadiene) and continue polymerization at about 70 °C. Following completion of the conjugated diene block polymerization, add an additional about 0.05 kg to about 0.25 kg of styrenic monomers to form the terminal styrene block. Terminate the polymerization by adding a terminating agent, such as methanol or deionized water (DIW). Purify the product to remove residual monomers and impurities to obtain styrene-based copolymers S1-S3. Characterize the product using NMR and GPC to verify the molecular structure and properties. The measured molecular structures and properties of the styrene-based copolymers S1-S3 are listed in Tables 1-3 below.

[Preparation of styrene-based copolymers (diblock) S4-S7]

Under a high-purity nitrogen atmosphere, add about 2 kg to about 5 kg of a cyclohexane/n-hexane mixed solvent, about 0.1 kg to about 0.5 kg of styrenic monomers, tetrahydrofuran, and ether derivatives into a 10 L polymerization reactor according to the desired molar ratio. Initiate polymerization at room temperature by adding about 0.1 kg to about 0.2 kg of n-butyllithium. After completion of the styrene block polymerization, introduce about 0.5 kg to about 0.9 kg of conjugated diene monomers (i.e., isoprene and/or butadiene) and continue polymerization at about 70 °C. Terminate the polymerization by adding a suitable terminating agent, such as methanol or deionized water (DIW). Purify the product to remove residual monomers and impurities to obtain styrene-based copolymers S4-S7. Characterize the product using NMR and GPC to verify the molecular structure and properties. The measured molecular structures and properties of styrene-based copolymers S4-S7 are listed in Tables 1-3 below.

[Styrene-based copolymer S0]

R100 purchased from Cray Valley (product name: Ricon 100) was used as styrene-based copolymer S0. The type of styrene-based copolymer S0 is styrene- butadiene random copolymer (SBR). It has a number-average molecular weight (Mn) of 4,500 g/mol, a styrene content of 20 wt%, a glass transition temperature (Tg) of -22 °C, and a vinyl content of 70 wt%. The molecular structures and properties of R100 are listed in Tables 1-3 below.

[Preparation of styrene-based copolymers (diblock) S8]

Under a high-purity nitrogen atmosphere, add about 550 g of a cyclohexane/n-hexane mixed solvent, about 18 g of styrenic monomers, tetrahydrofuran, and ether derivatives into a 1.6 L polymerization reactor according to the desired molar ratio. Initiate polymerization at about 30°C by adding about 9.4 g of 15%-n-butyllithium. After completion of the styrene block polymerization at about 30 °C, introduce about 27 g of styrenic monomers and 44 g of butadiene and continue polymerization at about 10°C to about 30 °C. Terminate the polymerization by adding a suitable terminating agent, such as methanol or deionized water (DIW). Purify the product to remove residual monomers and impurities to

obtain styrene-based copolymers S8.

[Preparation of styrene-based copolymers (diblock) S9]

Under a high-purity nitrogen atmosphere, add about 550 g of a cyclohexane/n-hexane mixed solvent, about 28 g of styrenic monomers, 23 g of butadiene, tetrahydrofuran, and ether derivatives into a 1.6 L polymerization reactor according to the desired molar ratio. Initiate polymerization at about 14°C by adding about 9.7 g of 15%-n-butyllithium. After completion of one segment polymerization at about 14°C to about 20 °C, introduce about 18 g of styrenic monomers and 23 g of butadiene and continue polymerization at about 13°C to about 21 °C. Terminate the polymerization by adding a suitable terminating agent, such as methanol or deionized water (DIW). Purify the product to remove residual monomers and impurities to obtain styrene-based copolymers S9.

[Preparation of styrene-based copolymers (diblock) S10]

Under a high-purity nitrogen atmosphere, add about 550 g of a cyclohexane/n-hexane mixed solvent, about 50 g of styrenic monomers, tetrahydrofuran, and ether derivatives into a 1.6 L polymerization reactor according to the desired molar ratio. Initiate polymerization at room temperature by adding about 10.4 g of 15-%n-butyllithium. After completion of one segment polymerization at about 25°C to about 37 °C, introduce about 5 g of isoprene and 45 g of butadiene and continue polymerization at about 23°C to about 36 °C. Terminate the polymerization by adding a suitable terminating agent, such as methanol or deionized water (DIW). Purify the product to remove residual monomers and impurities to obtain styrene-based copolymers S10.

[Preparation of styrene-based copolymers (diblock) S11]

Under a high-purity nitrogen atmosphere, add about 600 g of a cyclohexane/n-hexane mixed solvent, about 50 g of styrenic monomers, tetrahydrofuran, and ether derivatives into a 1.6 L polymerization reactor according to the desired molar ratio. Initiate polymerization at about 21°C by adding about 11 g of n-butyllithium(15 wt.%). After completion of one segment polymerization at about 39 °C, introduce about 15 g of myrcene and 35 g of butadiene and continue polymerization at about 38 °C. Terminate the polymerization by adding a suitable terminating agent, such as methanol or deionized water (DIW). Purify the product to remove residual monomers and impurities to obtain styrene-based copolymers S11.

[Number-average molecular weight (Mn), weight-average molecular weight (Mw), and polymer dispersity index (PDI) measurements of the styrene-based copolymers S0-S11]

Polystyrene was used as a standard to measure number average molecular weights and polymer dispersity indexes (PDI) of the styrene-based copolymers SO-S11. about 5 mL of tetrahydrofuran (THF) was added to about 0.01 g of the styrene-based copolymers SO-S11. The samples were analyzed by an instrument after filtered by a 0.22 μm filter to obtain the weight-average molecular weight (Mw) and polymer dispersity index of the styrene-based copolymers S1-S11, the number-average molecular weight (Mn) of the styrene-based copolymers S0, and the number-average molecular weight (Mn) and polymer dispersity index of the hydrocarbon resin. The results are listed in Table 2 and Table 4 below.

[Vinyl content, Styrenic unit content and Styrene block content of the styrene-based copolymers S0-S11]

The vinyl content and the styrenic unit content of the styrene-based copolymers S0-S11 were determined by proton nuclear magnetic resonance ($^1$H-NMR) spectroscopy. The content of the styrene block of the styrene-based copolymers S0-S11 was also determined by $^1$H-NMR spectroscopy. The NMR measurement method comprises following steps: dissolving the styrene-based copolymers SO-S11 in an appropriate solvent, such as $CDCl_3$, to obtain homogeneous solutions; performing proton nuclear magnetic resonance ($^1$H NMR) analysis using a 400 MHz spectrometer; and subsequently analyzing the resulting spectra. The results are listed in Table 2 and Table 3 below.

**[Measurement and Calculation of Blockiness Index of Styrene-Based Copolymers S0-S11]**

The styrene-based copolymers SO-S11 were dissolved in an appropriate solvent, such as $CDCl_3$, to obtain homogeneous solutions. High-resolution $^1$H NMR spectra were acquired using a 400 MHz proton nuclear magnetic resonance (NMR) spectrometer. In the $^1$H NMR spectrum, the chemical shift region of 6.0 ppm to 6.95 ppm corresponds to the aromatic protons of the styrene block segments. The integral values in this region were used to quantify the block content. The blockiness index (BI) of each styrene-based copolymer (S0 to S11) was determined using the following

equation:

$$\text{Blockiness Index (\%)} \approx \frac{(I_{6.0_6.95}/2)}{(I_{6.0_7.5}/5)} \times 100\%,$$

where $I_{6.0\text{-}6.95}$ represents the integral intensity in the 6.0 ppm to 6.95 ppm region, and $I_{6.0\text{-}7.5}$ represents the total integral intensity of the aromatic region. The results are listed in Table 2 below.

**[Glass Transition Temperature (Tg) Measurements of Styrene-Based Copolymers S0-S11]**

The glass transition temperatures (Tg) of the styrene-based copolymers S0-S11 were measured using a differential scanning calorimeter (DSC, TA Instruments Discovery 2500) under a nitrogen atmosphere with a sample mass of approximately 3 mg. Prior to analysis, the thermal history of each sample was eliminated by equilibrating it at - 100 °C, heating to 60 °C at a rate of 10 °C/min, holding isothermally at 60 °C for 1 min, cooling back to -100 °C at 10 °C/min, and holding isothermally at -100 °C for 1 min. For the actual measurement, each sample was again equilibrated at -100 °C and heated to 60 °C at a rate of 10 °C/min. The glass transition temperatures (Tg) were determined according to ASTM D3418. The results are listed in Table 2 below.

**[Cyclic content (%) Measurements of Styrene-Based Copolymers S0-S11]**

The cyclic contents in the polybutadiene segments of the styrene-based copolymers SO-S11 were quantified from $^1$H NMR spectra.

In the $^1$H NMR spectrum, the chemical shift region of 5.6 ppm to 5.8 ppm corresponds to vinylic protons of the cyclic structure within the polybutadiene segments. The integral intensity of this region was used to quantify the cyclic content. The weight ratio of cyclic structure to butadiene units of each styrene-based copolymer (S0 to S11) was determined using the following equation:

$$\text{Cyclic content(\%)} = \left(\frac{\text{Integral of cyclic peak}}{\text{Total integral of all butadiene peaks}}\right) \times 100\%$$

The results are listed in Table 3 below.

Table 1

| Styrene-based copolymer No. | Type (Unit) | Styrenic Monomer | Conjugated Diene Monomer | Ratio of Two Monomers used for Block Polymerization |
|---|---|---|---|---|
| S0 | SBR | Styrene | Butadiene | None of block |
| S1 | SBS | Styrene | Butadiene | Each block polymerization uses a single monomer |
| S2 | SBS | Styrene | Butadiene | |
| S3 | SBS | Styrene | Butadiene | |
| S4 | SB | Styrene | Butadiene | |
| S5 | SB | Styrene | Butadiene | |
| S6 | SB | tert-Butylstyrene | Butadiene | |
| S7 | SB | Vinyltoluene | Butadiene | |
| S8 | S-S/B | Styrene(S) | Butadiene(B) | S/B=0.6 |
| S9 | S1/B-S2/B | Styrene(S1, S2) | Butadiene(B) | S1/B=1.2<br>S2/B=0.8 |
| S10 | S-B/I | Styrene | Butadiene(B), Isoprene(I) | I/B=0.1 |
| S11 | S-B/M | Styrene | Butadiene(B) Myrcene(M) | M/B=0.4 |

Table 2

| Styrene-based copolymer No. | Mw (g/mol) | Polydispersity index (PDI) | Styrene block content (wt%) | Styrenic unit content (wt%) | Blockiness Index (%) | Glass transition temperature (Tg) |
|---|---|---|---|---|---|---|
| S0 | 4,500(Mn) | 1.06 | 0 | 20.6 | 5.5 | -22.0 °C |
| S1 | 5,212 | 1.04 | 20 | 20.5 | 51.9 | -33.1 °C |
| S2 | 5,610 | 1.14 | 30 | 29.6 | 78.6 | -21.0 °C |
| S3 | 9,122 | 1.04 | 50 | 49.6 | 94.5 | 12.88 °C |
| S4 | 5,149 | 1.03 | 30 | 29.1 | 91.3 | -17.4 °C |
| S5 | 5,523 | 1.03 | 50 | 49.2 | 96.7 | -5.3 °C |
| S6 | 5,397 | 1.03 | 50 | 49.2 | 99 | 0.9 °C |
| S7 | 5,260 | 1.03 | 50 | 50.2 | 99 | -2.1 °C |
| S8 | 5,437 | 1.05 | 20 | 50.1 | 69.2 | 5.5 °C |
| S9 | 5,411 | 1.07 | 55 | 49.9 | 59.7 | 4.7 °C |
| S10 | 5,698 | 1.03 | 50 | 49.5 | 99 | -1.2 °C |
| S11 | 5,725 | 1.03 | 50 | 49.9 | 96.9 | -5.3 °C |

Table 3

| Styrene-based copolymer No. | Total vinyl content (wt %) | Cyclic content (%) |
|---|---|---|
| S0 | 73.1 | 27.1 |
| S1 | 86.6 | 14.3 |
| S2 | 79.4 | 3.5 |
| S3 | 85.6 | 6.8 |
| S4 | 80.4 | 3.1 |
| S5 | 80.6 | 5.2 |
| S6 | 81.4 | 5.6 |
| S7 | 79.9 | 5.2 |
| S8 | 80.5 | 5.3 |
| S9 | 79.2 | 6.0 |
| S10 | 79.8 | -- |
| S11 | 80.5 | -- |

[Preparation of Hydrocarbon resin]

Bridged ring monomer compounds, monovinyl aromatic compounds, divinyl aromatic compounds, and toluene were added to a two-necked flask to form a mixture in the ratio shown in Table 4 below. The catalysts listed in Table 4 was then added to the mixture. The mixture was stirred for about 3 hours at the reaction temperatures indicated in Table 4 to polymerize the bridged ring monomer, monovinyl aromatic, and divinyl aromatic compounds. Ammonium hydroxide ($NH_4OH$) was subsequently added to the flask to terminate the polymerization reaction. The resulting polymer solution was precipitated into isopropanol to obtain a white solid, which was filtered and dried under vacuum to yield the hydrocarbon resins.

Table 4

| | Hydrocarbon resin |
|---|---|
| Norbornene (mol %) | -- |
| DCPD (mol %) | 20 |
| Styrene (mol %) | 65 |
| EVB (mol %) | 5.6 |
| DVB (mol %) | 9.5 |
| 1,3-Diisopropenylbenzene (mol %) | -- |
| Catalyst | $BF_3$.OEt |
| Reaction temperature (°C) | 0 |
| Yield (%) | 44.4 |
| Mn (g/mol) | 5,708 |
| Polydispersity index (PDI) | 2.69 |
| Hydrogen atom content (%) | 3.3 |

[Additive]

A divinylbenzene (DVB) compound purchased from Deltech, trade name "DVB" is used as a crosslinking aid. α,α- Bis(t-butylperoxy)diisopropylbenzene compound manufactured by NOF, trade name "PERBUTYL P" is used as an initiator. A silica with post-modified vinyl functional groups on surface purchased from union chemical ind. co. ltd, trade name "CSS-03C10V", is used as an inorganic filler.

[Preparation of metal foil laminated boards MC1, MC2, and ME1-ME10]

The above materials were mixed in the ratios shown in Table 5 to form resin compositions RC1, RC2, and RE1-RE10, where the abbreviation "phr" denotes "parts per hundred parts of resin." Each resin composition was then mixed with about 50 to about 60 parts by weight of toluene to prepare resin varnishes VC1, VC2, and VE1-VE10. A piece of glass fiber cloth (Asahi 2116, Dk/Df = 3.3/0.0030 @ 10 GHz) was immersed in each resin varnish and baked at about 160 °C to about 170 °C for about 5 to about 15 minutes to form prepregs PC1, PC2, and PE1-PE10. For lamination, a high-temperature elongation copper foil was placed between two prepregs of the same type (PC1, PC2, or PE1-PE10). The copper foil and prepregs were then laminated under a pressure of about 400 psi at about 210 °C for about 1 hour to obtain metal foil laminated boards MC1, MC2, and ME1-ME10, respectively. Ingredients of the resin compositions RC1, RC2, and RE1-RE10 are listed in Tables 5 and 6 below.

Table 5

| | RC1 | RC2 | RE1 | RE2 | RE3 | RE4 |
|---|---|---|---|---|---|---|
| Hydrocarbon resin (phr) | 100 | 100 | 100 | 100 | 100 | 100 |
| Styrene-based copolymer No. | S0 | S1 | S4 | S5 | S8 | S9 |
| Styrene-based copolymer content (phr) | 21 | 21 | 21 | 21 | 21 | 21 |
| DVB (phr) | 9 | 9 | 9 | 9 | 9 | 9 |
| Initiator (phr) | 0.3 | 0.3 | 0.3 | 0.3 | 0.3 | 0.3 |
| Inorganic filler (phr) | 30 | 30 | 30 | 30 | 30 | 30 |

Table 6

| | RE5 | RE6 | RE7 | RE8 | RE9 | RE10 |
|---|---|---|---|---|---|---|
| Hydrocarbon resin (phr) | 100 | 100 | 100 | 100 | 100 | 100 |
| Styrene-based copolymer No. | S3 | S6 | S7 | S10 | S11 | S2 |

(continued)

| | RE5 | RE6 | RE7 | RE8 | RE9 | RE10 |
|---|---|---|---|---|---|---|
| Styrene-based copolymer content (phr) | 21 | 21 | 21 | 21 | 21 | 21 |
| DVB (phr) | 9 | 9 | 9 | 9 | 9 | 9 |
| Initiator (phr) | 0.3 | 0.3 | 0.3 | 0.3 | 0.3 | 0.3 |
| Inorganic filler (phr) | 30 | 30 | 30 | 30 | 30 | 30 |

[Property Measurements of Metal Foil Laminated Boards MC1, MC2, and ME1-ME10]

The glass transition temperatures (Tg) of the metal foil laminated boards MC1, MC2, and ME1-ME10 were measured by a dynamic mechanical analysis (DMA, TA/Q800). The glass transition temperatures (Tg) of the metal foil laminated boards MC1, MC2, and ME1-ME10 were obtained from tan $\delta$ peaks in a DMA charts.

Rectangular specimens (10 mm $\times$ 6 mm) of the metal foil laminated boards MC1, MC2, and ME1-ME10 were tested in a three-point bending configuration at a frequency of 1 Hz with amplitudes within the linear viscoelastic region. The measurement protocol included isothermal holding at 0 °C, heating to 270 °C at 3 °C/min (first heating), cooling to 0 °C at 10 °C/min, and reheating to 270 °C at 3 °C/min (second heating). The maximum of the tan$\delta$ peak during each heating cycle was recorded as a glass transition temperatures (Tg), and the difference in the Tg values between heating cycles ($\Delta$Tg) was calculated, by following equation

$$\Delta\text{Tg (°C)} = (\text{Tg of second heating} - \text{Tg of fist heating}).$$

Full width at half maximum (FWHM) of the tan$\delta$ peak of the metal foil laminated boards MC1, MC2, ME1-ME5, and ME10 were determined by Gaussian fitting using OriginPro 2022b, and the relative percentage change of the full width at half maximum ($\Delta$FWHM%) of a tan$\delta$ peak of the metal foil laminated boards MC1, MC2, ME1-ME5, and ME 10 were also calculated by following equation

$$\Delta\text{FWHM\% (\%)} = \left(\frac{\text{FWHM of second heating} - \text{FWHM of fist heating}}{\text{FWHM of fist heating}}\right) \times 100\%$$

. The results are listed in Table 8 below.

The relative dielectric constants (Dk), dielectric loss tangents (Df), and R.C. % of the metal foil laminated boards MC1, MC2, and ME1-ME10 at 10 GHz were measured using a network analyzer software (network analyzer Keysight, P5007A, SCR). The results of the dielectric loss tangents (Df) are listed in Table 7 below.

R.C. % (Resin content) = (weight after baking-weight of glass fiber cloth) / ((weight after baking)) $\times$ 100%.

Table 7

| Metal Foil Laminated Board No. | Df @ 10GHz | $\Delta$Tg (°C) |
|---|---|---|
| MC1 | 0.0020 | 4.0 |
| MC2 | 0.00182 | 4.0 |
| ME1 | 0.00170 | 2.7 |
| ME2 | 0.00156 | 3.3 |
| ME3 | 0.00157 | 3.3 |
| ME4 | 0.00157 | 0.5 |
| ME5 | 0.00154 | 2.8 |
| ME6 | 0.00163 | 2.6 |
| ME7 | 0.00166 | 2.9 |
| ME8 | 0.00156 | 3.7 |

(continued)

| Metal Foil Laminated Board No. | Df @ 10GHz | ΔTg (°C) |
|---|---|---|
| ME9 | 0.00165 | 3.1 |
| ME10 | 0.00176 | 4.0 |

Table 8

| Metal Foil Laminated Board No. | MC1 | MC2 | ME1 | ME2 | ME3 | ME4 | ME5 | ME10 |
|---|---|---|---|---|---|---|---|---|
| ΔFWHM% (%) | 5 | 4 | 1 | 0 | 1.2 | 0.2 | 0.5 | 4 |

In some embodiments, according to Table 7, the metal foil laminated boards ME1-ME10 exhibit lower Df values at 10 GHz than those of the metal foil laminated boards MC1 and MC2. In particular, all the Df values of ME1-ME10 at 10 GHz are below 0.00200, and all of them are further below 0.0018. The Df values of ME1-ME9 at 10 GHz are equal or below 0.0017, and the Df values of ME2-ME5, ME8 at 10 GHz are even lower, below 0.0016. That is, some of the metal foil laminated boards, which include the prepreg manufactured from the resin composition containing the styrene-based copolymer of the present disclosure, may have a dielectric loss tangent (Df) of less than or equal to 0.00180, thereby exhibiting low dielectric loss. This indicates that the styrene-based copolymer of the present disclosure itself may have a dielectric loss tangent (Df) of less than or equal to 0.00180, and that the resin composition containing the copolymer, as well as prepregs or resin-coated copper foils prepared from the resin composition, may also exhibit a dielectric loss tangent (Df) of less than or equal to 0.00180.

In some embodiments, according to Table 7, the metal foil laminated boards ME1-ME9 exhibit lower ΔTg than those of the metal foil laminated boards MC1 and MC2. In particular, all ΔTg values of ME1-ME9 are below 4.0, and all of them are further below 3.8. The ΔTg values of ME1 and ME4-ME7 are below 3.0, and the ΔTg value of ME4 is even lower, below 1.0. That is, the metal foil laminated boards, which include the prepreg manufactured from the resin composition containing the styrene-based copolymer of the present disclosure, may exhibit high uniformity. This indicates that the styrene-based copolymer of the present disclosure itself may have high uniformity, and that the resin composition containing the copolymer, as well as prepregs or resin-coated copper foils prepared from the resin composition, may also exhibit high uniformity.

In some embodiments, according to Table 8, the metal foil laminated boards ME1-ME5 exhibit lower ΔFWHM% than those of the metal foil laminated boards MC1 and MC2. In particular, all ΔFWHM% values of ME1-ME5 are below 4.0, and all of them are further below 2. The ΔFWHM% values of ME2 and ME4-ME5 are below 1.0, and the ΔFWHM% value of ME2 and ME4 is even lower, below 0.5. That is, the metal foil laminated boards, which include the prepreg manufactured from the resin composition containing the styrene-based copolymer of the present disclosure, may exhibit high uniformity.

The prepregs PC1, PC2, PE2, and PE10 were placed into a mold, and liquid epoxy resin was poured over them. The resin was allowed to fully fill the pores and irregularities on the surfaces of the prepregs PC1, PC2, PE2, and PE10. The resin was then cured at room temperature, which typically required several hours. After complete curing, the samples were ground using a series of sandpapers or grinding wheels, progressing from coarse to fine, to smooth the surface. Polishing was performed to reduce surface micro-damages and scratches. A thin conductive coating of gold, carbon, or platinum was applied to the sample by vacuum evaporation or sputter coating. The coated sample was then fixed on an SEM sample holder using conductive adhesive or carbon tape to ensure stability and good conductivity. SEM observation was conducted using a JEOL JSM-IT200 instrument. FIGS. 1-4 are SEM images of the prepregs PC1, PC2, PE2, and PE10. In particular, FIG. 1 is a SEM image of the prepreg PC1 manufactured from the resin composition RC1 including the styrene-based copolymer S0, FIG. 2 is a SEM image of a prepreg PC2 manufactured from the resin composition RC2 including the styrene-based copolymer S1, FIG. 3 is a SEM image of a prepreg PE2 manufactured from the resin composition RE2 including the styrene-based copolymer S5, and FIG. 4 is a SEM image of the prepreg PE10 manufactured from the resin composition RE10 including the styrene-based copolymer S2.

As shown in FIG. 3, the prepregs PE2 exhibit less aggregation and higher uniformity, corresponding with the result of ΔTg and ΔFWHM% of metal foil laminated boards ME2. This indicates that the styrene-based copolymer of the present disclosure itself may have high uniformity, and that the resin composition containing the copolymer, as well as prepregs or resin-coated copper foils prepared from the resin composition, may also exhibit high uniformity.

While the disclosure has been described by way of example and in terms of the preferred embodiments, it should be understood that the disclosure is not limited to the disclosed embodiments. On the contrary, it is intended to cover various modifications and similar arrangements. Therefore, the scope of the appended claims should be accorded the broadest interpretation so as to encompass all such modifications and similar arrangements.

## Claims

1. A styrene-based copolymer, comprising:

   styrenic units; and
   conjugated diene units,
   wherein the styrenic units are present in an amount of 20 wt% to 60 wt% based on a total weight of the styrene-based copolymer, and the styrene-based copolymer has a blockiness index greater than 55 %.

2. The styrene-based copolymer according to claim 1, wherein the styrene-based copolymer comprises:

   a styrene block; and
   a conjugated diene block;
   wherein the content of the styrene block is in a range of 20 wt% to 60 wt% based on the total weight of the styrene-based copolymer, and the styrene-based copolymer has a glass transition temperature equal to or greater than -20 °C.

3. The styrene-based copolymer according to any one of claims 1 to 2, wherein the styrene-based copolymer consists of two or three blocks.

4. The styrene-based copolymer according to any one of claims 1 to 2, wherein the styrene-based copolymer has a weight average molecular weight equal to or less than 10,000 g/mol.

5. The styrene-based copolymer according to any one of claims 1 to 3, wherein the conjugated diene units comprise butadiene units, and the butadiene units include the cyclic structure, wherein the cyclic content of the styrene-based copolymer is less than or equal to 14% based on the total amount of the butadiene units.

6. The styrene-based copolymer according to any one of claims 1 to 2, wherein the styrenic units are present in the amount of less than 40 wt% based on the total weight of the styrene-based copolymer.

7. The styrene-based copolymer according to any one of claims 1 to 2, wherein the styrenic units are present in the amount of 40 wt% to 60 wt% based on the total weight of the styrene-based copolymer.

8. The styrene-based copolymer according to any one of claims 6 to 7, wherein the blockiness index of the styrene-based copolymer is equal or greater than 80 %.

9. The styrene-based copolymer according to claim 7, wherein the styrene-based copolymer comprises at least one block comprising styrenic units and conjugated diene units, and the blockiness index of the styrene-based copolymer is in a range of greater than 55 % to 60 %.

10. A resin composition comprising the styrene-based copolymer according to any one of claims 1 to 9.

11. A prepreg manufactured from the resin composition according to claim 10.

12. A resin-coated copper foil manufactured from the resin composition according to claim 10.

13. A metal foil laminated board, comprising the prepreg according to claim 11 or the resin-coated copper foil according to claim 12.

14. The metal foil laminated board according to claim 13, wherein the metal foil laminated board has at least one properties selected from the group consisting of: a difference in the glass transition temperatures between heating cycles ($\Delta Tg$) less than or equal to 4 °C, a relative percentage change of the full width at half maximum of a tan$\delta$ peak between heating cycles ($\Delta$FWHM%) less than or equal to 4 %, , and combinations thereof.

15. A method for manufacturing a metal foil laminated board, comprising:
    forming a mixture comprising a hydrocarbon resin and the styrene-based copolymer of one of claims 1 to 9.

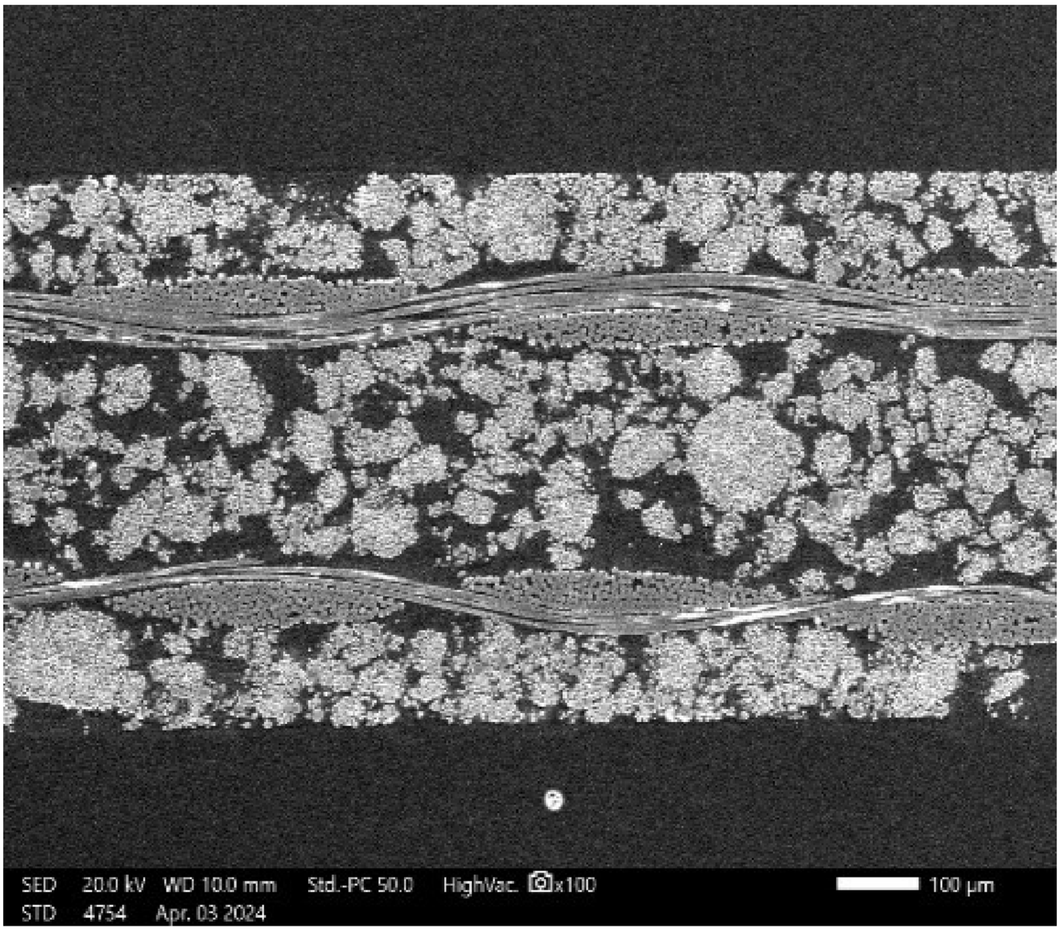
SED 20.0 kV WD 10.0 mm Std.-PC 50.0 HighVac. x100
100 µm
STD 4754 Apr. 03 2024

FIG. 1

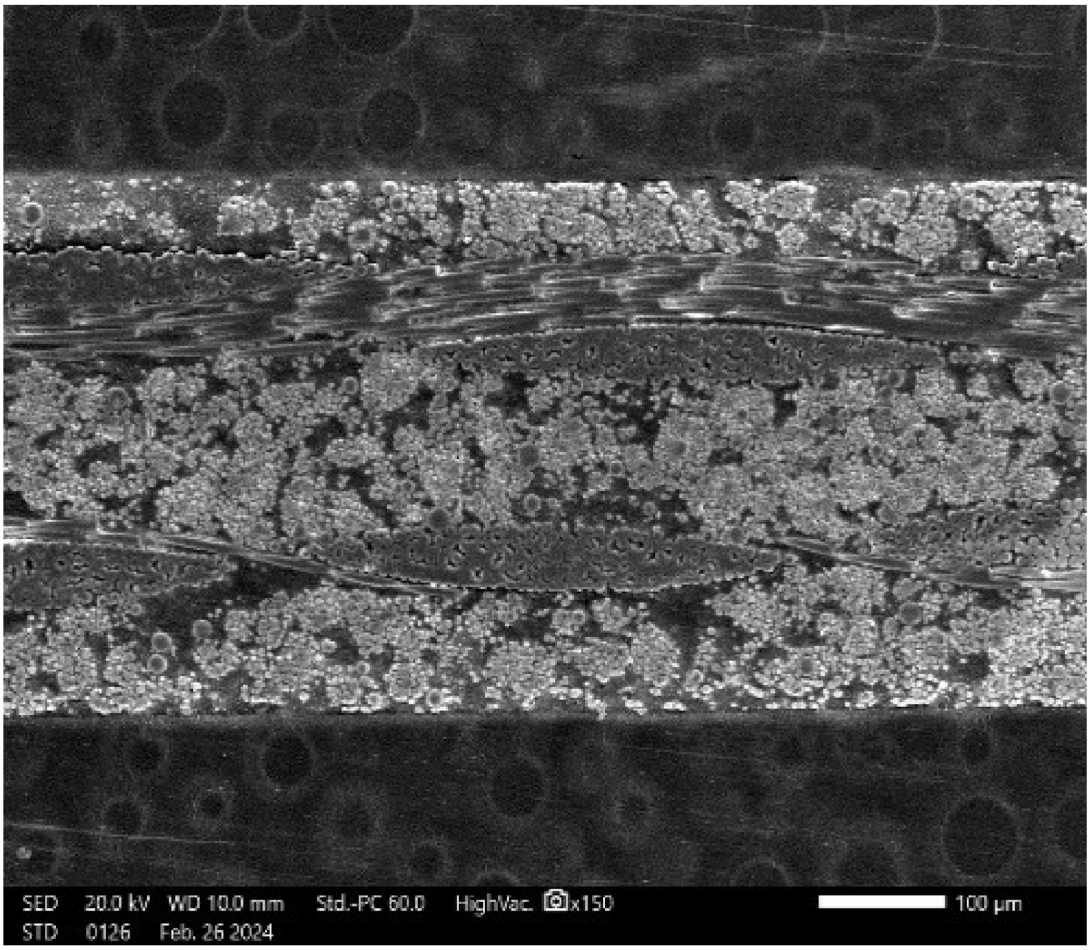
SED 20.0 kV WD 10.0 mm Std.-PC 60.0 HighVac. x150
100 µm
STD 0126 Feb. 26 2024

FIG. 2

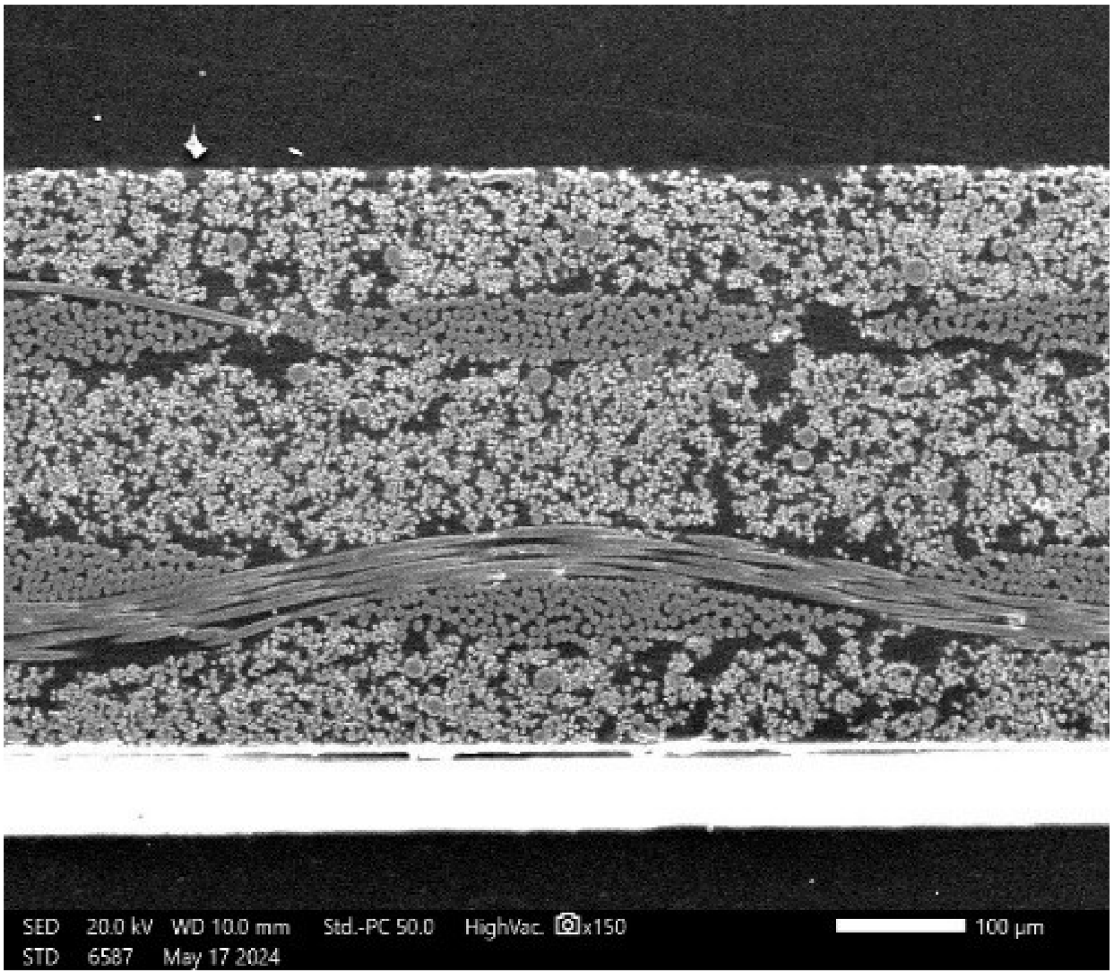
SED 20.0 kV WD 10.0 mm Std.-PC 50.0 HighVac. x150
100 µm
STD 6587 May 17 2024

FIG. 3

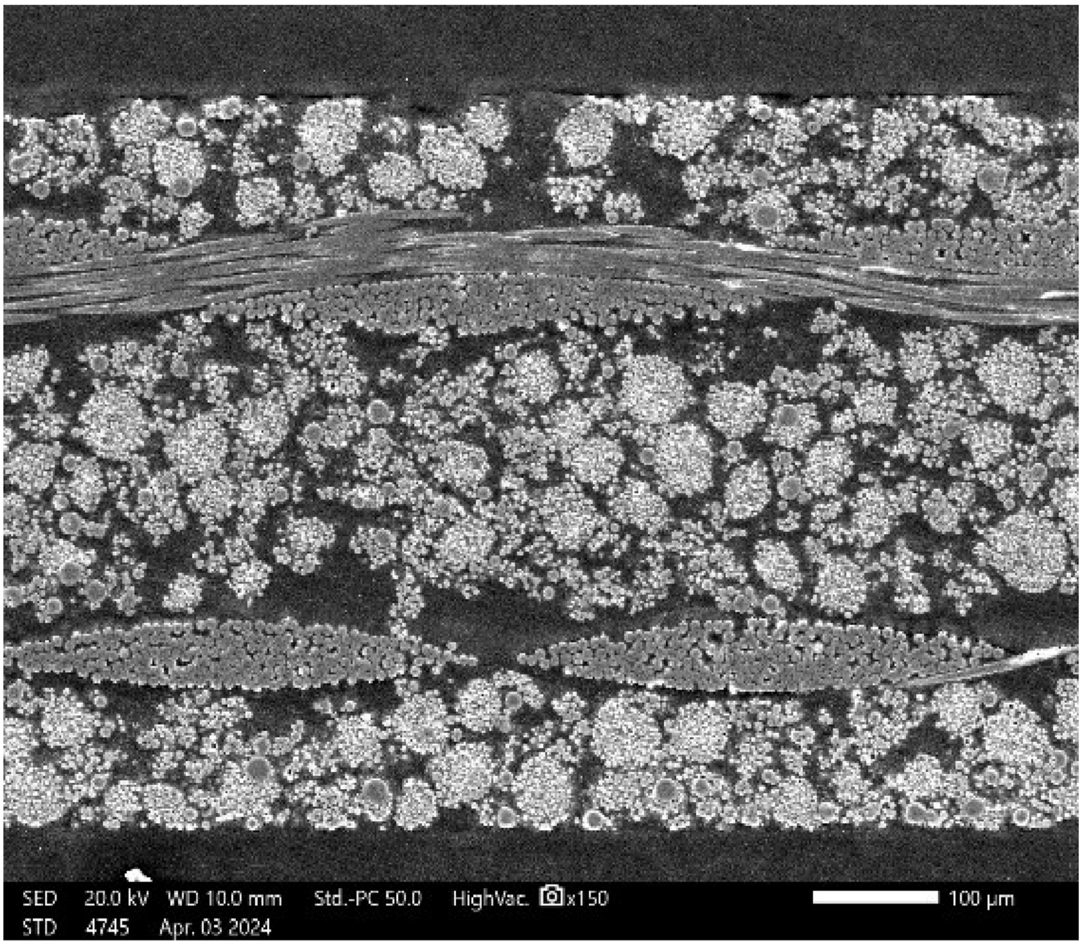
SED 20.0 kV WD 10.0 mm Std.-PC 50.0 HighVac. x150
100 µm
STD 4745 Apr. 03 2024

FIG. 4

Europäisches Patentamt
European Patent Office
Office européen des brevets

# EUROPEAN SEARCH REPORT

Application Number
EP 25 22 2765

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/225427 A1 (WRIGHT KATHRYN J [US] ET AL) 27 September 2007 (2007-09-27)<br>* table 2 *<br>----- | 1-3,7,9, 10 | INV.<br>C08F297/04<br>C08L25/08<br>C08L53/02<br>C09D125/08<br>C09D153/02<br>B32B15/20<br>B32B27/30<br>B32B27/32<br>C08J3/24<br>C08J5/24<br><br>ADD.<br>C08F212/36<br>C08F212/08<br>C08F236/04 |
| X | EP 4 324 880 A2 (DYNASOL ELASTOMEROS SA DE CV [MX]) 21 February 2024 (2024-02-21)<br>* table 2 *<br>----- | 1-3,7,9, 10 | |
| A | EP 3 733 399 A1 (KRATON POLYMERS RES BV [NL]) 4 November 2020 (2020-11-04)<br>* the whole document *<br>----- | 1-15 | |
| A | EP 4 011 619 A1 (NIPPON SODA CO [JP]) 15 June 2022 (2022-06-15)<br>* the whole document *<br>----- | 1-15 | |
| | | | TECHNICAL FIELDS SEARCHED (IPC) |
| | | | C08F<br>C08L<br>C09D<br>C08J<br>B32B |

The present search report has been drawn up for all claims

1

| Place of search | Date of completion of the search | Examiner |
|---|---|---|
| Munich | 14 April 2026 | Friebe, Lars |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..........................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 25 22 2765

This annex lists the patent family members relating to the patent documents cited in the above-mentioned European search report. The members are as contained in the European Patent Office EDP file on
The European Patent Office is in no way liable for these particulars which are merely given for the purpose of information.

14-04-2026

| Patent document cited in search report | | Publication date | Patent family member(s) | | | Publication date |
|---|---|---|---|---|---|---|
| US 2007225427 | A1 | 27-09-2007 | BR | PI0708978 | A2 | 21-06-2011 |
| | | | CN | 101421351 | A | 29-04-2009 |
| | | | EP | 1999206 | A2 | 10-12-2008 |
| | | | ES | 2404047 | T3 | 23-05-2013 |
| | | | JP | 5028470 | B2 | 19-09-2012 |
| | | | JP | 2009530473 | A | 27-08-2009 |
| | | | KR | 20090005327 | A | 13-01-2009 |
| | | | RU | 2008142104 | A | 27-04-2010 |
| | | | TW | 200740915 | A | 01-11-2007 |
| | | | US | 2007225427 | A1 | 27-09-2007 |
| | | | WO | 2007111852 | A2 | 04-10-2007 |
| EP 4324880 | A2 | 21-02-2024 | BR | 112021006532 | A2 | 06-07-2021 |
| | | | CA | 3115790 | A1 | 25-06-2020 |
| | | | CN | 112996826 | A | 18-06-2021 |
| | | | CN | 116217844 | A | 06-06-2023 |
| | | | EP | 3853274 | A2 | 28-07-2021 |
| | | | EP | 4324880 | A2 | 21-02-2024 |
| | | | ES | 2966215 | T3 | 19-04-2024 |
| | | | JP | 7747515 | B2 | 01-10-2025 |
| | | | JP | 7756119 | B2 | 17-10-2025 |
| | | | JP | 2022506453 | A | 17-01-2022 |
| | | | JP | 2023076434 | A | 01-06-2023 |
| | | | KR | 20210105407 | A | 26-08-2021 |
| | | | KR | 20240046309 | A | 08-04-2024 |
| | | | PL | 3853274 | T3 | 25-03-2024 |
| | | | TW | 202033587 | A | 16-09-2020 |
| | | | US | 2020199334 | A1 | 25-06-2020 |
| | | | US | 2021371642 | A1 | 02-12-2021 |
| | | | WO | 2020128635 | A2 | 25-06-2020 |
| EP 3733399 | A1 | 04-11-2020 | CN | 111875916 | A | 03-11-2020 |
| | | | EP | 3733399 | A1 | 04-11-2020 |
| | | | JP | 7627548 | B2 | 06-02-2025 |
| | | | JP | 2020183525 | A | 12-11-2020 |
| | | | KR | 20200128366 | A | 12-11-2020 |
| | | | TW | 202106735 | A | 16-02-2021 |
| | | | US | 2020347219 | A1 | 05-11-2020 |
| EP 4011619 | A1 | 15-06-2022 | CN | 114174419 | A | 11-03-2022 |
| | | | DK | 4011619 | T3 | 02-01-2025 |
| | | | EP | 4011619 | A1 | 15-06-2022 |
| | | | JP | 7250931 | B2 | 03-04-2023 |
| | | | JP | WO2021024680 | A1 | 11-02-2021 |
| | | | KR | 20220025858 | A | 03-03-2022 |
| | | | PL | 4011619 | T3 | 07-04-2025 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO.

EP 25 22 2765

This annex lists the patent family members relating to the patent documents cited in the above-mentioned European search report. The members are as contained in the European Patent Office EDP file on
The European Patent Office is in no way liable for these particulars which are merely given for the purpose of information.

14-04-2026

| Patent document cited in search report | Publication date | Patent family member(s) | Publication date |
| --- | --- | --- | --- |
| | | TW 202108648 A | 01-03-2021 |
| | | US 2022275195 A1 | 01-09-2022 |
| | | WO 2021024680 A1 | 11-02-2021 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 63733185
- JP 6192502 A
- JP 2000514122 W
- JP 2007302901 A
- US 128716